# EUROPÄISCHE PATENTSCHRIFT

(11) **EP 1 237 654 B1**
(45) Veröffentlichungstag und Bekanntmachung des Hinweises auf die Patenterteilung: **19.05.2004**
(21) Anmeldenummer: 00983314.6
(22) Anmeldetag: 13.12.2000
(51) Int. Cl.: B01L 3/00, G01N 21/05, G01N 21/25

(54) **ANORDNUNG VON PROBENBEHÄLTNISSEN UND DEREN VERWENDUNG ZUR MULTIANALYTBESTIMMUNG**
ARRANGEMENT OF CONTAINERS FOR SAMPLES AND USE THEREOF FOR MULTIANALYTE DETERMINATION
ENSEMBLE DE RECIPIENTS POUR ECHANTILLONS ET SON UTILISATION DANS LA DETERMINATION DE PLUSIEURS ANALYTES

(30) Priorität: 17.12.1999 CH 231699; 21.03.2000 CH 5342000
(43) Veröffentlichungstag der Anmeldung: 11.09.2002
(73) Patentinhaber: Zeptosens AG, 4108 Witterswil (CH)
(72) Erfinder: SCHÜRMANN-MADER, Eveline, CH-5089 Zeihen (CH); ABEL, Andreas, P., CH-4054 Basel (CH); BOPP, Martin, A., CH-4053 Basel (CH); DUVENECK, Gert, L., 79189 Bad Krozingen (DE); EHRAT, Markus, CH-4312 Magden (CH); KRESBACH, Gerhard, M., 79219 Staufen (DE); PAWLAK, Michael, 79725 Laufenburg (DE); SCHÄRER-HERNANDEZ, Nania, G., CH-4460 Gelterkinden (CH); SCHICK, Eginhard, 79618 Rheinfelden (DE)
(86) Internationale Anmeldenummer: PCT/EP2000/012668
(87) Internationale Veröffentlichungsnummer: WO 2001/043875

(56) Entgegenhaltungen:
- WO-A-96/35940
- WO-A-97/01087
- WO-A-98/22799
- WO-A-98/41863
- US-A- 5 019 351

## Beschreibung

Die Erfindung betrifft eine ein- oder zweidimensionale Anordnung von Flusszellen, als Bestandteil eines Arrays von Probenbehältnissen, mit mindestens je einem Zu- und Ablauf für jedes Probenbehältnis, gebildet aus einer Grundplatte und einem damit zusammengebrachten Körper mit einer Anordnung von räumlichen Aussparungen entsprechend der Anordnung der Probenbehältnisse, welche es ermöglicht, auch sehr geringe Proben- oder Reagentienmengen den Probenbehältnissen, welche in einer hohen Anzahl auf einer kleinen Grundfläche angeordnet sein können, zuzuleiten und / oder von ihnen abzuführen. Indem für jedes Probenbehältnis mindestens ein Reservoir zur Aufnahme von dem Probenbehältnis abzuführender Flüssigkeit in die Anordnung integriert ist, kann zugleich das periphere System von Flüssigkeitszu- und abführungen stark vereinfacht werden gegenüber herkömmlichen technischen Lösungen.

Zur Bestimmung eines einzelnen Analyten in einer Probe, insbesondere für die Diagnostik, sind vielfach Anordnungen bekannt geworden, bei denen der Transport von Proben und Reagentien mittels Kapillarkräften erfolgt. Damit kann oft der Einsatz von Pumpen zum Flüssigkeitstransport vermieden werden. In dem US-Patent Nr. 5,019,351 wird eine besondere Ausführungsform einer solchen Vorrichtung beschrieben, bei der zwischen einer Grund- und einer Deckplatte eine Reaktionskapillare mit einem Einlassende und einem Auslassende angeordnet ist, wobei das Einlassende fluidisch verbunden ist mit einer Zone zur Aufnahme und Mischung einer Probe mit Reagentien, und wobei die Reaktionskapillare unterteilt ist in eine "Stromaufwärts-" (upstream region) und eine "Stromabwärts"-Region (downstream region), und wobei die Dicke der Reaktionskapillare von der Stromaufwärts-Region in Richtung der Stromabwärts-Region zunimmt. Mit dieser Anordnung sollen gleichmässige, reproduzierbare Strömungsverhältnisse innerhalb der Reaktionskapillaren erzielt werden. In dieser Patentschrift sind des weiteren Ausführungsformen beschrieben, in denen das Auslassende der Reaktionskapillaren mit einem Bereich zum Auffangen austretender Flüssigkeit verbunden ist. Dabei sind alle Bestandteile dieser Struktur; mit Ausnahme der Einlassregion, in einem durchgehenden Kanal- bzw. Kapillarsystem, zwischen der gemeinsamen Grundplatte und einer gemeinsamen Deckplatte, untergebracht. Die wesentliche technische Grundlage für die Patentschrift beruht auf einem Stofftransport aufgrund des Kapillareffektes.

Eine solche Anordnung von kapillar-artigen Flusszellen ist jedoch für den Einsatz in Verbindung mit einer Vielzahl von Messbereichen auf einem gemeinsamen Träger, zur Bestimmung unterschiedlicher Analyten oder Untersuchung unterschiedlicher Proben, als kaum geeignet, insbesondere wegen des erforderlichen hohen Platzbedarfs. Entsprechend findet sich in US-Patent Nr. 5,019,351 auch keinerlei Hinweis auf array-förmige Anordnungen mehrerer derartiger Flusszellen. Ausserdem ist eine Entfernung in die Auffangzone ausgetretener Flüssigkeit nicht möglich.

Zur Bestimmung einer Vielzahl von Analyten sind gegenwärtig vor allem Verfahren verbreitet, in denen in sogenannten Mikrotiterplatten der Nachweis unterschiedlicher Analyten in diskreten Probenbehältnissen oder "Wells" dieser Platten erfolgt. Am weitesten verbreitet sind dabei Platten mit einem Raster von 8 x 12 Wells auf einer Grundfläche von typischerweise ca. 8 cm x 12 cm (siehe beispielsweise Corning Costar-Katalog Nr. 3370, 1999), wobei zur Füllung eines einzelnen Wells ein Volumen von einigen hundert Mikrolitern erforderlich ist. Für zahlreiche Anwendungen wäre es jedoch wünschenswert, das Probenvolumen deutlich zu verringern, nicht nur zur Verminderung des Bedarfs an gegebenenfalls nur in kleinen Mengen verfügbaren Proben und an Reagentien, sondern insbesondere auch zur Verringerung der Diffusionswege und damit der Assay-Durchführungszeiten im Falle von Assays, bei denen biologische oder biochemische oder synthetische Erkennungselemente zur Erkennung eines oder mehrerer Analyten in einer Probe an einer Begrenzungswand der Probenbehältnisse immobilisiert sind

Im Falle von in einem Array angeordneten offenen Probenbehältnissen, welche von der klassischen Mikrotiterplatte abgeleitet sind, bestand eine bekannte technische Lösung zur Verringerung der Volumina der individuellen Probenbehältnisse darin, eine größere Anzahl von Wells auf gleicher Grundfläche anzuordnen, beispielsweise 384 (siehe beispielsweise Coming Costar Katalog Nr. 3702, 1999) oder 1536 anstelle der klassischen 96 Wells. Dieser Ansatz hat den Vorteil, dass zumindest für einen Teil der erforderlichen Arbeitsschritte der Probenmanipulation, wie z. B. Probenzugabe oder Absaugen, die als industrieller Standard eingeführten Geräte und Laborroboter weiterhin beibehalten werden konnten. Andere bekannte technische Lösungen bestanden darin, die klassische Plattengrundfläche aufzugeben und die Größe der einzelnen Wells ausschliesslich nach den für eine bestimmte Anwendung notwendigen Probenvolumina auszurichten. Derartige Anordnungen wurden unter der Bezeichnung "Nanotiterplatten" bekannt, deren individuelle Probenbehältnis-Volumina teilweise nur noch einige Nanoliter betragen. Diese technische Lösung erfordert jedoch die Abkehr von den derzeit weit gebräuchlichen Laborrobotern, welche auf den klassischen Mikrotiterplattenstandard ausgelegt sind.

Mit zunehmender Verringerung der Größe der individuellen offenen Probenbehältnisse und / oder mit der zur Verringerung der Diffusionswege wünschenswerten Verringerung der Dicke der Flüssigkeitsschicht über der Grundfläche wird jedoch der zunehmende Einfluss der Verdunstung von Flüssigkeit während eines Assays zu einem immer größeren, zu berücksichtigendem Problem.

Dem besagten Problem der Verdunstung kann weitgehend begegnet werden mittels Verwendung von, bis auf Probeneintritts- und Probenaustrittsöffnungen, geschlossenen Probenbehältnissen.

Für den Fall einer einzigen Messfläche mit einem damit in Kontakt stehenden Probenbehältnis sind derartige Durchflusszellen, zu denen eine flüssige Probe und / oder Reagentien in einem einzigen Puls oder kontinuierlich zugeführt werden können, seit langem bekannt.

In der US-P 5,747,274 werden Messanordnungen und Verfahren zur Früherkennung eines Herzinfarkts, durch die Bestimmung mehrerer von mindestens drei Herzinfarktmarkern beschrieben, wobei die Bestimmung dieser Marker in individuellen oder in einem gemeinsamen Probenbehältnis erfolgen kann, wobei im letzteren Falle, der gegebenen Beschreibung folgend, ein einziges Probenbehältnis als ein durchgehender Flusskanal ausgebildet ist, dessen eine Begrenzungsfläche beispielsweise eine Membran bildet, auf der Antikörper für die drei verschiedenen Marker immobilisert sind. Es gibt jedoch keine Hinweise auf eine Bereitstellung von mehreren derartigen Probenbehältnissen oder Flusskanälen auf einem gemeinsamen Träger. Ausserdem werden auch keine geometrischen Angaben über die Größen der Messflächen gegeben.

In derartigen Verfahren zum Nachweis von Analyten in einer oder mehreren Proben sind in der Vergangenheit in zunehmendem Maße optische Methoden, beispielsweise basierend auf der Bestimmung der Änderung einer Absorption oder einer Lumineszenz, entwickelt worden, da solche Methoden berührungslos und ohne stärkere Rückwirkung auf die Probe selbst durchgeführt werden können. Die klassischen Messmethoden, wie beispielsweise Absorptions- oder Fluoreszenzmessungen, beruhen im allgemeinen auf der direkten Beleuchtung eines Probevolumens in einem Probenbehältnis oder eines Messfeldes auf einer Innenwand eines Probenbehältnisses einer flüssigen Probe. Diese Anordnungen haben den Nachteil, dass neben dem Anregungsvolumen oder der Anregungsfläche, innerhalb derer ein Signal zum Nachweis eines Analyten erzeugt werden soll, im allgemeinen ein erheblicher Anteil der Umgebung von Anregungslicht erfasst wird, was zur nachteiligen Erzeugung von störenden Untergrundsignalen führen kann.

Zur Erreichung tieferer Nachweisgrenzen sind zahlreiche Messanordnungen entwickelt worden, in denen der Nachweis des Analyten auf dessen Wechselwirkung mit dem evaneszenten Feld beruht, welches mit der Lichtleitung in einem optischen Wellenleiter verbunden ist, wobei auf der Oberfläche des Wellenleiters biochemische oder biologische Erkennungselemente zur spezifischen Erkennung und Bindung der Analytmoleküle immobilisiert sind. Koppelt man eine Lichtwelle in einen optischen Wellenleiter ein, der von optisch dünneren Medien, d.h. Medien mit niedrigerem Brechungsindex, umgeben ist, so wird sie durch Totalreflexion an den Grenzflächen der wellenleitenden Schicht geführt. In die optisch dünneren Medien tritt dabei ein Bruchteil des geführten Lichts ein. Diesen Anteil bezeichnet man als evaneszentes oder quergedämpftes Feld. Die Stärke des evaneszenten Feldes ist sehr stark abhängig von der Dicke der wellenleitenden Schicht selbst sowie vom Verhältnis der Brechungsindices der wellenleitenden Schicht und der sie umgebenden Medien. Bei dünnen Wellenleitern, d. h. Schichtdicken von derselben oder niedrigerer Dicke als der zu führenden Wellenlänge, können diskrete Moden des geleiteten Lichts unterschieden werden. Derartige Verfahren haben den Vorteil, dass die Wechselwirkung mit dem Analyten auf die Eindringtiefe des evaneszenten Feldes ins angrenzende Medium, in der Größenordnung von einigen hundert Nanometern, beschränkt ist und Störsignale aus der Tiefe des Mediums weitgehend vermieden werden können. Die ersten vorgeschlagenen derartigen Messanordnungen beruhten auf hochmultimodalen, selbsttragenden Einschichtwellenleitern, wie beispielsweise Fasern oder Plättchen aus transparentem Kunststoff oder Glas, mit Stärken von einigen hundert Mikrometern bis zu mehreren Millimetern.

In der US-P 4,978,503 wird eine Messanordnung beschrieben, in der eine flüssige Probe über Kapillarkräfte in eine Kavität eingezogen wird, wobei eine optisch transparente Seitenwand als selbsttragender Multimode-Wellenleiter ausgebildet ist, wobei zumindest auf einem Teil seiner der Kavität zugewandten Oberfläche biochemische Erkennungselemente ("Patches") zur Erkennung und Bindung eines Analyten aus einer Probe immobilisiert sind. In dieser Anordnung ist von Nachteil, dass ein Austausch der in die Kapillare gelangten Flüssigkeit nicht vorgesehen ist, welches beispielsweise in einem mehrstufigen Assay wünschenswert wäre.

In der WO 94/27137 werden Messanordnungen beschrieben, in denen "Patches" mit unterschiedlichen Erkennungselementen, zum Nachweis unterschiedlicher Analyten, auf einem selbstragenden optischen Substratwellenleiter (Einschichtwellenleiter) mit Stirnflächenlichteinkopplung immobilisiert sind, wobei die räumlich selektive Immobilisierung mittels photoaktivierbarer Crosslinker erfolgt. Gemäß der gegebenen Beschreibung können mehrere Patches in Reihe in gemeinsamen parallelen Flusskanälen oder Probenbehältnissen angeordnet sein, wobei sich die parallelen Flusskanäle oder Probenbehältnisse über die gesamte Länge des als Sensor genutzten Bereichs des Wellenleiters erstrecken, um eine Beeinträchtigung der Lichtleitung im Wellenleiter zu vermeiden. Hinweise auf eine zweidimensionale Integration einer Vielzahl von Patches und Probenbehältnissen werden jedoch nicht gegeben. In einer ähnlichen Anordnung werden in der WO 97/35203 verschiedene Ausführungsformen einer Anordnung beschrieben, in der in parallelen, separaten Flusskanälen oder Probenbehältnissen für die Probe und Kalibrationslösungen niedriger und gegebenenfalls zusätzlich hoher Analytkonzentration unterschiedliche Erkennungselemente zur Bestimmung verschiedener Analyten jeweils immobilisiert sind. Auch hier wird jedoch keinerlei Hinweis auf mögliche 2-dimensionale Anordnungen gegeben.

Zur Verbesserung der Empfindlichkeit und gleichzeitig einfacheren Herstellung in Massenfabrikation wurden planare Dünnschichtwellenleiter vorgeschlagen. Ein planarer Dünnschichtwellenleiter besteht im einfachsten Fall aus einem Dreischichtsystem: Trägermaterial, wellenleitende Schicht, Superstrat ( bzw. zu untersuchende Probe), wobei die wellenleitende Schicht den höchsten Brechungsindex besitzt. Zusätzliche Zwischenschichten können die Wirkung des planaren Wellenleiters noch verbessern.

Es sind verschiedene Verfahren für die Einkopplung von Anregungslicht in einen planaren Wellenleiter bekannt. Die am frühesten benutzten Verfahren beruhten auf Stirnflächenkopplung oder Prismenkopplung, wobei zur Verminderung von Reflexionen infolge von Luftspalten im allgemeinen eine Flüssigkeit zwischen Prisma und Wellenleiter aufgebracht wird. Diese beiden Methoden sind vor allem in Verbindung mit Wellenleitern relativ grosser Schichtdicke, d. h. insbesondere selbsttragenden Wellenleitern, sowie bei einem Brechungsindex des Wellenleiters von deutlich unter 2 geeignet. Zur Einkopplung von Anregungslicht in sehr dünne, hochbrechende wellenleitende Schichten ist demgegenüber die Verwendung von Koppelgittern eine wesentlich elegantere Methode.

Es können verschiedene Methoden zum Analytnachweis im evaneszenten Feld geführter Lichwellen in optischen Schichtwellenleitem unterschieden werden. Aufgrund des eingesetzten Messprinzips kann man beispielsweise zwischen Fluoreszenz- oder allgemeiner Lumineszenzmethoden auf der einen Seite und refraktiven Methoden andererseits unterscheiden. Hierbei können Verfahren zur Erzeugung einer Oberflächenplasmonenresonanz in einer dünnen Metallschicht auf einer dielektrischen Schicht mit niedrigerem Brechungsindex in die Gruppe der refraktiven Methoden mit einbezogen werden, sofern als Basis zur Bestimmung der Messgrösse der Resonanzwinkel des eingestrahlten Anregungslichts zur Erzeugung der Oberflächenplasmonenresonanz dient. Die Oberflächenplasmonenresonanz kann aber auch zur Verstärkung einer Lumineszenz oder zur Verbesserung des Signal-zu-Hintergrund-Verhältnisses in einer Lumineszenzmessung verwendet werden. Die Bedingungen zur Erzeugung einer Oberflächenplasmonenresonanz sowie zur Kombination mit Lumineszenzmessungen sowie mit wellenleitenden Strukturen sind vielfach in der Literatur beschrieben, beispielsweise in den US-Patenten US-P 5,478,755, US-P 5,841,143, US-P 5,006,716 und US-P 4,649,280.

Mit dem Begriff "Lumineszenz" wird in dieser Anmeldung die spontane Emission von Photonen im ultravioletten bis infraroten Bereich nach optischer oder nichtoptischer, wie beispielsweise elektrischer oder chemischer oder biochemischer oder thermischer Anregung, bezeichnet. Beispielsweise sind Chemilumineszenz, Biolumineszenz, Elektrolumineszenz und insbesondere Fluoreszenz und Phosphoreszenz unter dem Begriff "Lumineszenz" mit eingeschlossen.

Bei den refraktiven Messmethoden wird die Änderung des sogenannten effektiven Brechungsindex aufgrund molekularer Adsorption oder Desorption auf dem Wellenleiter zum Nachweis des Analyten benutzt. Diese Änderung des effektiven Brechungsindex wird, im Falle von Gitterkoppler-Sensoren, bestimmt aus der Änderung des Koppelwinkels für die Ein- oder Auskopplung von Licht in oder aus dem Gitterkoppler-Sensor, und im Falle von interferometrischen Sensoren aus der Änderung der Phasendifferenz zwischen dem in einem Sensorarm und einem Referenzarm des Interferometers geführten Messlichts.

Die genannten refraktiven Methoden haben den Vorteil, dass sie ohne Verwendung zusätzlicher Markierungsmoleküle, sogenannter molekularer Labels, eingesetzt werden können. Der Nachteil dieser labelfreien Methoden ist jedoch, dass die damit erzielbaren Nachweisgrenzen aufgrund der geringen Selektivität des Messprinzips, in Abhängigkeit von dem Molekulargewicht des Analyten auf pico- bis nanomolare Konzentrationsbereiche beschränkt sind, was für viele Anwendungen der modernen Spurenanalytik, beispielsweise für diagnostische Applikationen, nicht ausreichend ist.

Zur Erreichung tieferer Nachweisgrenzen erscheinen lumineszenz-basierende Methoden aufgrund größerer Selektivität der Signalerzeugung besser geeignet. Dabei ist die Lumineszenzanregung auf die Eindringtiefe des evaneszenten Feldes in das optisch dünnere Medium, also auf die unmittelbare Umgebung des wellenleitenden Bereichs mit einer Eindringtiefe in der Größenordnung von einigen hundert Nanometern ins Medium beschränkt. Dieses Prinzip wird evaneszente Lumineszenzanregung genannt.

Mittels hochbrechender Dünnschichtwellenleiter, in Kombination mit Lumineszenzdetektion, basierend auf einem nur einige hundert Nanometer dünnen wellenleitenden Film auf einem transparenten Trägermaterial, konnte in den letzten Jahren die Empfindlichkeit deutlich gesteigert werden. Beispielsweise wird in der WO 95/33197 eine Methode beschrieben, in der das Anregungslicht über ein Reliefgitter als diffraktives optisches Element in den wellenleitenden Film eingekoppelt wird. Die isotrop abgestrahlte Lumineszenz in der Eindringtiefe des evaneszenten Feldes befindlicher lumineszenzfähiger Substanzen wird mittels geeigneter Messvorrichtungen, wie zum Beispiel Photodioden, Photomultiplier oder CCD-Kameras, gemessen. Es ist auch möglich, den in den Wellenleiter rückgekoppelten Anteil der evaneszent angeregten Strahlung über ein diffraktives optisches Element, zum Beispiel ein Gitter, auszukoppeln und zu messen. Diese Methode ist zum Beispiel in der WO 95/33198 beschrieben.

Zur gleichzeitigen oder aufeinanderfolgenden Durchführung von ausschließlich lumineszenzbasierenden Mehrfachmessungen mit im wesentlichen monomodalen, planaren anorganischen Wellenleitern sind, z. B. in der WO 96/35940, Vorrichtungen (Arrays) bekannt geworden, in denen auf einer Sensorplattform wenigstens zwei getrennte wellenleitende Bereiche angeordnet sind, so dass das in einem wellenleitenden Bereich geführte Anregungslicht von anderen wellenleitenden Bereichen getrennt ist. Im Sinne der vorliegenden Erfindung sollen räumlich getrennte Messbereiche (d) (gemäß Figur 3) durch die geschlossene Fläche definiert werden, die dort immobilisierte biologische oder biochemische oder synthetische Erkennungselemente zur Erkennung eines Analyten aus einer flüssigen Probe einnehmen. Diese Flächen können dabei eine beliebige Geometrie, beispielsweise die Form von Punkten, Kreisen, Rechtecken, Dreiecken, Ellipsen oder Linien, haben.

In der WO 98/22799 werden Anordnungen von Probenbehältnissen für Messanordnungen zur Bestimmung der im evaneszenten Feld eines planaren Wellenleiters angeregten Lumineszenz vorgeschlagen, bei denen die zur Einkopplung des Anregungslichts dienenden Gitter jeweils vom Material bedeckt sind, aus denen die Seitenwände der Probenbehältnisse geformt sind. Zwar kann damit jegliche Veränderung der Einkoppelbedingungen verhindert werden, jedoch werden damit sehr hohe Anforderungen an die Transparenz, Fluoreszenzfreiheit und möglichst niedrige Brechzahl des Wandmaterials gestellt, die in Kombination nur schwer gleichzeitig zu erfüllen sind.

Nachteilig für alle im bekannten Stand der Technik beschriebenen Vorrichtungen ist, dass diese entweder keinen Austausch der Proben- und / oder Reagentienflüssigkeiten erlauben oder hierfür relativ komplexe Anordnungen erfordern, nämlich jeweils die Verbindung mit fluidisch abdichtenden Anschlüssen und Schlauchverbindungen zur Zuund Abfuhr flüssiger Proben und Reagentien, was insbesondere den automatischen Betrieb und Austausch von Kombinationen von als Sensorplattformen dienenden Grundplatten und darauf aufgesetzten Körpern zur Erzeugung von Probenbehältnissen im jeweiligen Einmalgebrauchsverfahren deutlich erschwert bzw. technisch aufwendige Lösungen erfordert.

Es besteht daher ein Bedarf nach einer einfachen Anordnung von Probenbehältnissen, insbesondere in Form ein- oder zweidimensionaler Arrays, bei denen die Zufuhr von Probenlösungen und Reagentien und die Abfuhr austretender Proben- oder Reagentienflüssigkeiten deutlich vereinfacht ist, wobei jedoch die qualitativen Messgenauigkeiten nicht negativ beeinflusst werden.

Es wurde nun überraschend gefunden, dass durch die erfindungsgemäße Ausgestaltung von Probenbehältnissen, welche jeweils ein Reservoir zur Aufnahme von aus Flusszellen als Teil dieser Probenbehältnisse austretenden Flüssigkeiten, beispielsweise in Form einer als Reservoir dienenden Vertiefung in einer Aussenwand, aufweisen, eine Vielzahl von Probenbehältnissen auf einer kleinen Grundfläche angeordnet werden können, ohne dass ein komplexes System von peripheren Zu- und Ableitungen für eine automatische Zuund Abfuhr von Proben und Reagentien erforderlich wird. Zugleich können die Aufnahmevolumina der einzelnen Flusszellen selbst dann niedrig gehalten werden, wenn zur Erzeugung eines ausreichenden Mess-Signals relativ große Grundflächen der Flusszellen auf einer Grundplatte erforderlich sind, da die Flusszellen bis auf die Ein- und Austrittsöffnungen für Proben- oder Reagentienzu- und abfuhr geschlossen sind und die Höhe einer Flusszelle als der Abstand zwischen einer Grundplatte und der gegenüberliegenden Begenzung einer Ausnehmung eines mit der Grundplatte zusammengebrachten Körpers sehr gering, d. h. sogar weniger als 100 µm sein kann.

Mit dieser Anordnung können auch sehr kleine Probenvolumina sehr genau definiert und konstant gehalten werden. Die in der erfindungsgemäßen Anordnung erzeugten Flusszellen können aufgrund der möglichen kleinen Volumina sehr effizient mittels Verdrängungsreinigung gewaschen werden. Sofern, wie in einigen der nachfolgend aufgeführten Ausführungsformen der erfindungsgemäßen Anordnung beschrieben, biologische oder biochemische oder synthetische Erkennungselemente zum Nachweis eines Analyten auf der Grundplatte immobilisiert sind, ergibt sich als ein weiterer Vorteil, dass der Endpunkt einer diffusionskontrollierten Analytbindung schnell erreicht wird, aufgrund der nur kurzen Diffusionswege an die Nachweisoberfläche. Weiterhin vorteilhaft ist, dass durch die Analytbindung erzeugtes Signal vom Gesamtvolumen einer zugegebenen Probe im wesentlichen unabhängig ist, sofern zumindest die Flusszelle als Bestandteil der erfindungsgemäßen Anordnung vollständig gefüllt ist. Indem die Flusszellen bis auf Zu- und Abläufe geschlossen sind, kann eine Verdunstung von Flüssigkeiten weitgehend verhindert werden, was den Betrieb der Anordnung auch bei gegenüber Raumtemperatur deutlich erhöhten Temperaturen ermöglicht. Gesamthaft gesehen beinhaltet die vorliegende Erfindung damit erhebliche Vorteile gegenüber dem bekannten Stand der Technik.

Gegenstand der Erfindung ist eine Anordnung von Probenbehältnissen in einem ein- oder zweidimensionalen Array, umfassend eine Grundplatte und einen damit derart zusammengebrachten Körper, dass zwischen der Grundplatte und besagtem Körper ein Array von räumlichen Aussparungen zur Erzeugung eines Arrays von gegeneinander fluidisch abgedichteten Flusszellen mit jeweils mindestens einem Zulauf und mindestens einem Ablauf erzeugt wird, gekennzeichnet dadurch, dass mindestens ein Ablauf jeder Flusszelle in ein mit dieser Flusszelle fluidisch verbundenes Reservoir führt, welches aus der Flusszelle austretende Flüssigkeit aufnimmt.

Dabei ist jeweils das Reservoir zur Aufnahme aus der Flusszelle austretender Flüssigkeit als eine Vertiefung in der Außenwand des mit der Grundplatte zusammengebrachten Körpers ausgebildet und über oder oberhalb besagter Aussparungen angeordnet.

Die erfindungsgemäße Anordnung ermöglicht es, eine Vielzahl unterschiedlicher Probenund / oder Reagensflüssigkeiten lokal adressiert verschiedenen Probenbehältnissen gleichzeitig zuzuführen, ohne gegebenenfalls vorangehend zugeführte Flüssigkeiten entfernen zu müssen. Dieses erfordert keine festen Schlauchverbindungen und kann beispielsweise über die Spritze eines Dispensers erfolgen, mit der jeweils der Zulauf einer Flusszelle der erfindungsgemäßen Anordnung adressiert werden kann. Dadurch, dass Reservoirs zur Aufnahme aus den Flusszellen austretender Flüssigkeiten in der Anordnung integriert sind, entfallen auch anderenfalls notwendige Ablaufschläuche und deren Anschlüsse. Damit kann eine Vielzahl von Flusszellen zur Untersuchung unterschiedlicher Proben auf kleinster Grundfläche zusammengefasst werden.

Für die gleichzeitige Proben- oder Reagentienzugabe zu einer Vielzahl von Probenbehältnissen können Multikanalpipettoren für manuelle oder automatische Reagentienapplikation verwendet werden, bei denen die individuellen Pipetten in einoder zweidimensionalen Arrays angeordnet sind, sofern die erfindungsgemäße Anordnung von Probenbehältnissen die Zuläufe in dem entsprechenden Raster aufweist. Bevorzugt entspricht daher das Raster (Aufeinanderfolge in Zeilen und Spalten) der Anordnung dem Raster der Wells von Standardmikrotiterplatten. Als industrieller Standard ist dabei eine Anordnung von 8 x 12 Wells mit einem (Zentrum-zu-Zentrum) Abstand von ca. 9 mm etabliert. Hiermit kompatibel sind kleinere Arrays mit beispielsweise 3, 6, 12, 24 und 48 Wells in gleichem Abstand. Es können auch mehrere erfindungsgemäße Anordnungen von Probenbehältnissen mit solchen kleineren Arrays von Probenbehältnissen derart zusammengefügt werden, dass die einzelnen Zuläufe besagter Flusszellen in einem ganzzahligen Vielfachen des Abstands von ca. 9 mm angeordnet sind.

Seit einiger Zeit werden auch Platten mit 384 und 1536 Wells, als ganzzahligem Vielfachen von 96 Wells auf gleicher Grundfläche mit ensprechend reduziertem Wellabstand, verwendet, welche ebenfalls als Standardmikrotiterplatten bezeichnet werden sollen. Durch die Anpassung des Rasters der Probenbehältnisse der erfindungsgemäßen Anordnung, mit den Zu- und Abläufen jeder Flusszelle, an diese Standards können eine Vielzahl kommerziell eingeführter und erhältlicher Labor-Pipettoren und -Roboter für die Probenzugabe verwendet werden.

Es wird bevorzugt, dass die äusseren Grundabmessungen der erfindungsgemäßen Anordnung den Grundabmessungen dieser Standard-Mikrotiterplatten entsprechen.

Während bei den kommerziell erhältlichen Mikrotiterplatten die Probenzugabe in der Mitte der offenen Probenbehältnisse erfolgt, ist es aus physikalischen Gründen für die erfindungsgemäße Anordnung vorteilhafter, wenn die Zu- oder Abläufe und zugehörigen Einlass- und Auslassöffnungen am Rande der zugehörigen Flusszellen, beispielsweise an den gegenüberliegenden Randpunkten, vorzugsweise jedoch an den zueinander diagonalen Randpunkten, angeordnet sind, wie dieses beispielhaft in den Ausführungsbeispielen gezeigt ist. Daher ist vorzugsweise die Position des gesamten Arrays, von beispielsweise 8 x 12 Zellen im Falle einer Anordnung von 96 Probenbehältnissen, auf der Grundfläche leicht versetzt im Vergleich zur Position der Zellen einer klassischen Mikrotiterplatte, so dass die Addressierung der Zuläufe und /oder Reservoirs mit den standardmäßigen Laborrobotern oder-pipettoren ermöglicht wird, ohne deren Umprogrammierung zu erfordern. Dieses erfordert einen Versatz von jeweils 4.5 mm zu beiden Grundkantenseiten im Falle des 96-er Rasters, und entsprechend von 2.25 mm bzw. 1.125 mm im Falle des 384-er Rasters bzw. des 1536-er Rasters. Aus technischen Gründen (verfügbare Außenwandstärke der Anordnung) wird ein Versatz von 2.25 mm bevorzugt, so dass die erfindungsgemäße Anordnung mit für den 384-er Standard ausgelegten Robotern ohne eine Änderung von deren Programmierung addressiert werden kann.

Weiterer Gegenstand der Erfindung ist eine Anordnung von beispielsweise 2 bis 8 Probenbehältnissen, mit den vorgängig genannten Eigenschaften, in einer Spalte oder beispielsweise 2 bis 12 Probenbehältnissen in einer Zeile, welche ihrerseits mit einem Träger ("Metaträger") mit den Abmessungen von Standardmikrotiterplatten derart zusammengefügt werden, dass das Raster (Aufeinanderfolge in Zeilen oder Spalten) der Zuläufe der Flusszellen dem Raster der Wells einer Standardmikrotiterplatte entspricht.

Das Zusammenfügen der Anordnung der Probenbehältnisse mit dem Metaträger kann beispielsweise durch Kleben oder durch genaue Anpassung ohne Kleben erfolgen, wenn er für den einmaligen Gebrauch vorgesehen ist, oder beispielsweise durch Einklinken oder Einschieben in eine geeignet ausgebildete Halterung, wenn er für mehrfachen Gebrauch vorgesehen ist. Das Material des Metaträgers kann, beispielsweise, ausgewählt sein aus der Gruppe, die von form-, spritz- oder fräsbaren Kunststoffen, Metallen, Silikaten, wie zum Beispiel Glas, Quarz oder Keramiken gebildet wird

Es können auch mehrere solche Spalten oder Zeilen von Probenbehältnissen mit einem einzigen derartigen Metaträger zusammengefügt werden, dass das Raster (Aufeinanderfolge in Zeilen oder Spalten) der Zuläufe der Flusszellen dem Raster der Wells einer Standardmikrotiterplatte, d. h. einem ganzzahligen Vielfachen von 9 mm (entsprechend 96-Well-Platte) oder von 4.5 mm (entsprechend 384-Well-Platte, siehe oben) oder von 2.25 mm (entsprechend 1536-Well-Platte, siehe oben) entspricht.

Die erfindungsgemäße Anordnung von Probenbehältnissen kann jedoch selbstverständlich auch in einem anderen Raster ausgebildet sein. Aus den Flusszellen austretende Flüssigkeit, beispielsweise nach sequentieller Zugabe verschiedener Reagentien, kann in dem mit dieser Flusszelle fluidisch verbundenen Reservoir aufgefangen oder durch Absaugen an dem Ort des Zulaufs oder des Reservoirs auch wieder entfernt werden.

Für die Erzeugung der räumlichen Aussparungen zwischen der Grundplatte und dem damit zusammengebrachten Körper gibt es dabei verschiedene technische Möglichkeiten. In einer möglichen Anordnung sind auf der Grundplatte räumliche Strukturen im Raster des Arrays der zu erzeugenden Flusszellen ausgebildet. Diese Strukturen auf der Grundplatte können beispielsweise die Wände oder Teile der Wände, wie beispielsweise Sockel, zwischen den neben- und hintereinander angeordneten Flusszellen bilden, welche durch Zusammenbringen der Grundplatte mit einem entsprechend geformten Körper erzeugt werden. Um das Array von Flusszellen zu erzeugen, ist es auch möglich, dass zur Erzeugung der räumlichen Aussparungen zwischen der Grundplatte und dem damit zusammengebrachten Körper Ausnehmungen in der Grundplatte ausgebildet sind.

Eine weitere Ausführungsform besteht darin, dass zur Erzeugung der Aussparungen zwischen der Grundplatte und dem damit zusammengebrachten Körper Ausnehmungen in besagtem Körper ausgebildet sind. Für diese Ausführungsform wird bevorzugt, dass die Grundplatte im wesentlichen planar ist.

Der mit der Grundplatte zusammenzubringende Körper zur Erzeugung des Arrays von Flusszellen kann aus einem einzigen Werkstück bestehen. Eine andere Ausführungsform besteht darin, dass der mit der Grundplatte zusammengebrachte Körper aus mehreren Teilen zusammengesetzt ist, wobei die zusammengefügten Bestandteile besagten Körpers vorzugsweise eine irreversibel zusammengefügte Einheit bilden.

Es wird bevorzugt, dass der mit der Grundplatte zusammengebrachte Körper hilfsweiseVorkehrungen umfasst, welche das Zusammenfügen besagten Körpers und der Grundplatte erleichtern.

Die Anordnung umfasst vorzugsweise eine Vielzahl, d. h. 2 - 2000 Flusszellen, bevorzugt 2 - 400, besonders bevorzugt 2 - 100 Flusszellen.

Bevorzugt wird, dass das Raster (Aufeinanderfolge in Zeilen und / oder Spalten) der Zuläufe der Flusszellen dem Raster der Wells einer Standardmikrotiterplatte entspricht.

Eine weitere Ausführungsform der Anordnung ist dadurch gekennzeichnet, dass sie durch einen zusätzlichen Abschluss, beispielsweise eine Folie, Membran oder eine Deckplatte, abgeschlossen wird.

Durch Variation der Grundflächen und der Tiefe der Ausnehmungen kann die Aufnahmefähigkeit der Flusszellen in einem weiten Bereich variiert werden, so dass das Innenvolumen jeder Flusszelle typischerweise 0.1 µl - 1000 µl, bevorzugt 1 µl - 20 µl beträgt. Dabei können die Innenvolumina verschiedener Flusszellen einer Anordnung gleich oder unterschiedlich sein.

Wenn sequentiell unterschiedliche Proben- oder Reagensflüssigkeiten in eine Flusszelle gefüllt werden, wird typischerweise ein Vielfaches des Zellvolumens an Flüssigkeit eingesetzt, um die vorangehend zugegebene Flüssigkeit und darin enthaltene Bestandteile möglichst vollständig zu verdrängen. Daher wird bevorzugt, dass das Aufnahmevolumen des mit der fluidisch verbundenen Reservoirs größer, vorzugsweise mindestens 5-mal größer als das Innenvolumen der Flusszelle ist.

Es wird bevorzugt, dass die Tiefe der Ausnehmungen zwischen der Grundplatte und dem damit zusammengefügten Körper 1 - 1000 µm, besonders bevorzugt 20 - 200 µm beträgt. Die Größe der Ausnehmungen eines Arrays kann einheitlich oder unterschiedlich sein und die Grundfllächen können beliebige, vorzugsweise rechteck- oder polygonförmige oder auch andere Geometrie haben. Ebenso können die lateralen Abmessungen der Grundflächen in einem weiten Bereich variiert werden, wobei typischerweise die Grundflächen der Ausnehmungen zwischen der Grundplatte und dem damit zusammengefügten Körpers jeweils 0.1 mm² - 200 mm², bevorzugt 1 mm² - 100 mm² betragen. Es wird bevorzugt, dass die Ecken der Grundflächen abgerundet sind. Abgerundete Ecken wirken sich günstig auf das Strömungsprofil aus und erleichtern die Entfernung eventuell gebildeter Gasblasen aus den Flusszellen bzw. verhindern deren Entstehen.

Die Materialien für die Grundplatte, den damit zusammengebrachten Körper und eine gegebenenfalls verwendete zusätzliche Deckplatte müssen den Anforderungen für den jeweils geplanten Einsatz der Anordnung genügen. In Abhängigkeit von der spezifischen Applikation betreffen diese Anforderungen chemische und physikalische Beständigkeit, zum Beispiel gegen saure oder basische Medien, Salze, Alkohole oder Detergentien als Bestandteile von wässrigen Lösungen, oder Formamid, Temperaturbeständigkeit (zum Beispiel zwischen -30°C und 100°C), möglichst ähnliche thermische Ausdehnungskoeffizienten von Grundplatte und damit zusammengebrachtem Körper, optische Eigenschaften (z. B. Fluoreszenzfreiheit, Reflexionsvermögen), mechanische Bearbeitbarkeit etc. Es wird bevorzugt, dass das Material des mit der Grundplatte zusammgebrachten Körpers ausgewählt ist aus der Gruppe, die von form-, spritz- oder fräsbaren Kunststoffen, Metallen, Silikaten, wie zum Beispiel Glas, Quarz oder Keramiken gebildet wird. Ebenso kann das Material der zusätzlichen durchgehenden Deckplatte ausgewählt sein aus der Gruppe, die von form-, spritz- oder fräsbaren Kunststoffen, Metallen, Silikaten, wie zum Beispiel Glas, Quarz oder Keramiken gebildet wird. Auch bezüglich der Grundplatte wird bevorzugt, dass das Material der Grundplatte Materialien umfasst aus der Gruppe, die von form-, spritz- oder fräsbaren Kunststoffen, Metallen, Silikaten, wie zum Beispiel Glas, Quarz oder Keramiken gebildet wird. Dabei können die genannten Komponenten (Grundplatte, damit zusammengefügter Körper, Deckplatte) jeweils aus einem einheitlichen Material bestehen als auch eine Mischung oder schichtweise oder laterale Zusammenfügung verschiedener Materialien umfassen, wobei die Materialien sich gegenseitig ersetzen können.

Eine bevorzugte Ausführungsform besteht darin, dass auf der Grundplatte biologische oder biochemische oder synthetische Erkennungselemente zum Nachweis eines oder mehrerer Analyten immobilisiert sind.

Die einfachste Form der Immobilisierung besteht in physikalischer Adsorption, beispielsweise infolge hydrophober Wechselwirkungen zwischen den Erkennungselementen und der Grundplatte. Diese Wechselwirkungen können jedoch durch die Zusammensetzung des Mediums und dessen physikalisch-chemische Eigenschaften, wie beispielsweise Polarität und Ionenstärke, in ihrem Ausmaß stark verändert werden. Insbesondere im Falle sequentieller Zugabe verschiedener Reagentien in einem mehrstufigen Assay ist das Haftvermögen der Erkennungselemente nach rein adsorptiver Immobilisierung auf der Oberfläche oft unzureichend. In einer Weiterentwicklung der Anordnung wird das Haftvermögen dadurch verbessert, dass zur Immobilisierung biologischer oder biochemischer oder synthetischer Erkennungselemente auf der Grundplatte eine Haftvermittlungsschicht (f) (gemäß Figur 3) aufgebracht ist. Es wird bevorzugt, dass die Hanvermittlungsschicht (f) eine Stärke von weniger als 200 nm, vorzugsweise von weniger als 20 nm, hat. Für die Herstellung der Haftvermittlungsschicht eignen sich eine Vielzahl von Materialien. Ohne jegliche Einschränkung wird bevorzugt, dass die Haftvermittlungsschicht (f) sich aus chemischen Verbindungen aus den Gruppen der Silane, Epoxide, "selbstorganisierten funktionalisierten Monoschichten", funktionalisierten Polymeren und Polymergelen zusammensetzt.

Im Falle der gleichzeitigen Bestimmung unterschiedlicher Analyten, vorzugsweise durch Bindung an verschiedene selektive Erkennungselemente, ist es von Vorteil, wenn diese Bindungsereignisse durch Detektion räumlich getrennt aufgelöster Signale erfolgen kann. Eine Weiterentwicklung der erfindungsgemäßen Anordnung ist dadurch gekennzeichnet, dass biologische oder biochemische oder synthetische Erkennungselemente in räumlich getrennten Messbereichen (d) immobilisiert sind. Diese räumlich getrennten Messbereiche (d) können durch räumlich selektive Aufbringung von biologischen oder biochemischen oder synthetischen Erkennungselementen auf besagter Grundplatte erzeugt werden. Für die Aufbringung eignen sich eine Vielzahl bekannter Verfahren. Ohne Beschränkung der Allgemeinheit wird bevorzugt, dass zur Aufbringung der biologischen oder biochemischen oder synthetischen Erkennungselemente auf der Grundplatte eines oder mehrere Verfahren verwendet werden aus der Gruppe von Verfahren, die von "Ink jet spotting", mechanischem Spotting mittels Stift, Feder oder Kapillare, "micro contact printing", fluidische Kontaktierung der Messbereiche mit den biologischen oder biochemischen oder synthetischen Erkennungselementen durch deren Zufuhr in parallelen oder gekreuzten Mikrokanälen, unter Einwirkung von Druckunterschieden oder elektrischen oder elektromagnetischen Potentialen gebildet werden.

Als besagte biologische oder biochemische oder synthetische Erkennungselemente können Komponenten aus der Gruppe aufgebracht werden, die von Nukleinsäuren (DNA, RNA) oder Nukleinsäure-Analogen (z.B. PNA), Antikörpern, Aptameren, membrangebundenen und isolierten Rezeptoren, deren Liganden, Antigenen für Antikörper, durch chemische Synthese erzeugten Kavitäten zur Aufnahme molekularer Imprints, "Histidin-Tag-Komponenten" gebildet wird. Es ist auch vorgesehen, dass als biologische oder biochemische oder synthetische Erkennungselemente ganze Zellen oder Zellfragmente aufgebracht werden.

Die erfindungsgemäße Anordnung ist für eine Vielzahl von Anwendungen vorgesehen, bei denen nicht nur ein einzelner, sondern zwei oder mehr Analyten in einer Probe bestimmt werden sollen. Daher wird bevorzugt, dass auf der Grundplatte in den Bereichen der Aussparungen zwischen der Grundplatte und dem damit zusammengebrachten Körper Arrays von jeweils 2 oder mehr räumlich getrennten Messbereichen (d) angeordnet sind, in denen gleiche oder unterschiedliche biologische oder biochemische oder synthetische Erkennungselemente immobilisiert sind.

Die immobilisierten Erkennungselemente sind im allgemeinen so ausgewählt, dass sie mit möglichst hoher Spezifiziät den nachzuweisenden Analyten erkennen und binden. Im allgemeinen ist jedoch zu erwarten, dass auch eine unspezifische Anlagerung von Analytmolekülen an die Oberfläche der Grundplatte stattfindet, insbesondere wenn zwischen den in den Messbereichen immobiliserten Erkennungselementen noch Freistellen vorhanden sind. Es wird daher bevorzugt, dass zwischen den räumlich getrennten Messbereichen (d) gegenüber dem Analyten "chemisch neutrale" Verbindungen zur Verminderung unspezifischer Bindung oder Adsorption aufgebracht sind. Als "chemisch neutrale Verbindungen" werden dabei solche Stoffe verstanden, welche keine Erkennung und Bindung des Analyten aufweisen, so dass keine oder nur eine minimale unspezifische Bindung auftritt. Die Auswahl dieser Stoffe ist abhängig von den Eigenschaften des Analyten. Ohne jegliche Einschränkung wird bevorzugt, dass die besagten "chemisch neutralen" Verbindungen aus den Gruppen ausgewählt sind, die zum Beispiel von Albuminen, insbesondere Rinderserum- oder Humanserum-Albumin, Heringssperma oder auch Polyethylenglycolen gebildet werden.

Die erfindungsgemäße Anordnung kann eingesetzt werden bei der Bestimmung einer Vielzahl unterschiedlicher Nachweisgrößen, wobei die jeweilige Ausgestaltung insbesondere der Grundplatte abhängig ist von der zu verwendenden Messmethode. Ein Gegenstand der Erfindung ist eine Anordnung, die dadurch gekennzeichnet ist, dass die Grundplatte mit den darauf immobilisierten biologischen oder biochemischen oder synthetischen Erkennungselementen ausgelegt ist zur Bestimmung der Änderung von optischen, elekrischen, elektrochemischen oder thermischen Nachweisgrößen oder zum Nachweis einer radioaktiven Strahlung. Bevorzugt wird, dass die Grundplatte mit den darauf immobilisierten biologischen oder biochemischen oder synthetischen Erkennungselementen ausgelegt ist zur Bestimmung der Änderung von optischen Nachweisgrößen und mindestens in einem Wellenlängenbereich im sichtbaren oder nahen infraroten Spektrum transparent ist. Besonders bevorzugt wird, dass die Grundplatte ein Trägersubstrat aus Glas oder einem thermoplastischen oder einem spritzbaren Kunststoff umfasst, welches mindestens in einem Wellenlängenbereich im sichtbaren oder nahen infraroten Spektrum transparent ist.

Unter den optischen Nachweismethoden zeichnen sich solche Verfahren, bei denen der Analytnachweis im evaneszenten Feld eines Wellenleiters stattfindet, durch verbesserte Empfindlichkeit und Beschränkung des Nachweisvolumens auf die vom evaneszenten Feld erfasste, oberflächennahe Schicht des Wellenleiters aus. Daher wird bevorzugt, dass die Grundplatte einen durchgehenden oder in einzelne Bereiche aufgeteilten optischen Wellenleiter umfasst. Besonder bevorzugt wird dabei eine solche Anordnung, die dadurch gekennzeichnet ist, dass der optische Wellenleiter ein optischer Schichtwellenleiter mit einer, den Aussparungen zugewandten ersten optisch transparenten Schicht (a) auf einer zweiten optisch transparenten Schicht (b) mit niedrigerem Brechungsindex als Schicht (a) (gemäß Figur 3) ist. Unter dem Begriff "optische Transparenz" wird dabei und nachfolgend Transparenz bei einer oder mehrerer Anregungswellenlängen im sichtbaren oder nahen infraroten Spektrum verstanden.

Die optisch transparente Schicht (b) sollte absorptions- und fluoreszenzarm, im Idealfall absorptions- und fluoreszenzfrei sein. Außerdem sollte die Oberflächenrauhigkeit niedrig sein, da sich die Oberflächenrauhigkeit der Schicht (b) bei Abscheidung einer weiteren Schicht (a) mit höherem Brechungsindex, welche als wellenleitende Schicht vorgesehen ist, in Abhängigkeit vom Abscheidungsprozess in mehr oder minder starkem Maße auf die Oberflächenrauhigeit der Schicht (a) auswirkt. Eine erhöhte Oberflächenrauhigkeit an den Grenzschichten der Schicht (a) führt zu erhöhten Streuverlusten des geführten Lichts, was jedoch unerwünscht ist. Diese Anforderungen werden durch eine Reihe von Materialien erfüllt. Es wird bevorzugt, dass das Material der zweiten optisch transparenten Schicht (b) aus Silikaten, z. B. Glas oder Quarz, oder einem transparenten thermoplastischen oder spritzbaren Kunststoff, bevorzugt aus der Gruppe, die von Polycarbonat, Polyimid, Polymethylmethacrylat oder Polystyrol gebildet wird, besteht.

Bei einer gegebenen Schichtdicke der optisch transparenten Schicht (a) ist die Empfindlichkeit einer erfindungsgemässen Anordnung um so größer, je höher der Unterschied des Brechungsindexes der Schicht (a) zu den Brechungsindices der umgehenden Medien ist, d.h. je höher der Brechungsindex der Schicht (a) ist. Es wird bevorzugt, dass der Brechungsindex der ersten optisch transparenten Schicht (a) größer als 1.8 ist.

Eine weitere wichtige Anforderung an die Eigenschaften der Schicht (a) besteht darin, dass die Ausbreitungsverluste darin geführten Lichts möglichst niedrig sind. Es wird bevorzugt, dass die erste optisch transparente Schicht (a) aus TiO₂, ZnO, Nb₂O₅, Ta₂O₅, HfO₂, oder ZrO₂, bevorzugt aus TiO₂, Ta₂O₅ oder Nb₂O₅ besteht. Es können auch Kombinationen mehrerer derartiger Materialien verwendet werden.

Bei gegebenem Material der Schicht (a) und gegebenem Brechungsindex ist die Empfindlichkeit bis zu einem unteren Grenzwert der Schichtdicke umso größer, je geringer die Schichtdicke ist. Der untere Grenzwert wird bestimmt durch den Abbruch der Lichtleitung bei Unterschreiten eines von der Wellenlänge des zu führenden Lichts abhängigern Wert sowie einen zu beobachtenden Anstieg der Ausbreitungsverluste bei sehr dünnen Schichten mit weiterer Schichtdickenabnahme. Es wird bevorzugt, dass die Dicke der ersten optisch transparenten Schicht (a) 40 bis 300 nm, bevorzugt 100 bis 200 nm beträgt.

Sofern eine Eigenfluoreszenz der Schicht (b) nicht auszuschließen ist, insbesondere wenn diese aus einem Kunststoff wie beispielsweise Polycarbonat besteht, oder auch um den Einfluss der Oberflächenrauhigkeit der Schicht (b) auf die Lichtleitung in der Schicht (a) zu vermindern, kann es von Vorteil sein, wenn zwischen den Schichten (a) und (b) eine Zwischenschicht aufgebracht ist. Daher besteht eine weitere Ausführungsform der erfindungsgemäßen Anordnung darin, dass sich zwischen den optisch transparenten Schichten (a) und (b) und in Kontakt mit Schicht (a) eine weitere optisch transparente Schicht (b') (gemäß Figur 3) mit niedrigerem Brechungsindex als dem der Schicht (a) und einer Stärke von 5 nm - 10000 nm, vorzugsweise von 10 nm - 1000 nm, befindet.

Für die Einkopplung von Anregungslicht in einen optischen Wellenleiter sind eine Vielzahl von Methoden bekannt. Im Falle einer relativ dicken wellenleitenden Schicht bis hin zu einem selbsttragenden Wellenleiter ist es möglich, das Licht unter Verwendung von Linsen geeigneter numerischer Apertur so in eine Stirnfläche des Wellenleiters zu fokussieren, dass es über innere Totalreflexion geleitet wird. Im Falle von Wellenleitern mit größerer Stirnbreite als Wellenleiterschichtdicke werden dafür bevorzugt Zylinderlinsen verwendet. Dabei können die Linsen sowohl räumlich entfernt vom Wellenleiter angeordnet als auch direkt mit diesem verbunden sein. Im Falle geringerer Wellenleiterschichtdicken ist diese Form der Stirnflächenkopplung weniger geeignet. Besser eingesetzt'werden kann dann die Kopplung über Prismen, die bevorzugt zwischenraumfrei an den Wellenleiter angefügt oder über eine brechungsindexanpassende Flüssigkeit mit dem Wellenleiter verbunden sind. Es ist auch möglich, das Anregungslicht über eine optische Faser an den optischen Wellenleiter der erfindungsgemäßen Anordnung heranzuführen oder das in einen anderen Wellenleiter eingekoppelte Licht in den Wellenleiter überzukoppeln, indem beide Wellenleiter einander so nahe gebracht werden, dass ihre evaneszenten Felder überlappen und damit eine Energieübertragung stattfinden kann. Bestandteil der erfindungsgemäßen Anordnung ist daher, dass die Einkopplung von Anregungslicht in die optisch transparente Schicht (a) zu den Messbereichen (d) über ein oder mehrere optische Einkoppelelemente aus der Gruppe erfolgt, die von Prismenkopplern, evaneszenten Kopplern mit zusammengebrachten optischen Wellenleitern mit überlappenden evaneszenten Feldern, Stirnflächenkopplern mit vor einer Stirnseite der wellenleitenden Schicht angeordneten fokussierenden Linsen, vorzugsweise Zylinderlinsen, und Gitterkopplern gebildet wird.

Bevorzugt wird, dass die Einkopplung des Anregungslichts zu den Messbereichen (d) mithilfe von einer oder mehreren Gitterstrukturen (c) (gemäß Figur 3) erfolgt, die in der optisch transparenten Schicht (a) ausgeprägt sind.

Weiterer Bestandteil der Erfindung ist, dass Auskopplung von in der optisch transparenten Schicht (a) geführtem Licht mithilfe von Gitterstrukturen (c') (gemäß Figur 3) erfolgt, die in der optisch transparenten Schicht (a) ausgeprägt sind.

Es ist dabei möglich, dass in der optisch transparenten Schicht (a) ausgeprägte Gitterstrukturen (c) und (c') gleiche oder unterschiedliche Periode haben und parallel oder nicht parallel zueinander ausgerichtet sind.

Die Anordnung kann so gestaltet werden, dass die Gitterstrukturen (c) und (c') wechselseitig als Ein- und / oder Auskoppelgitter verwendet werden können.

Es wird bevorzugt, dass die Gitterstrukturen (c) und gegebenenfalls zusätzlich vorhandene Gitterstrukturen (c') eine Periode von 200 nm - 1000 nm aufweisen und die Modulationstiefe der Gitter 3 bis 100 nm, bevorzugt 10 bis 30 nm beträgt.

Dabei wird bevorzugt, dass das Verhältnis von Modulationstiefe zur Dicke der ersten optisch transparenten Schicht (a) gleich oder kleiner als 0,2 ist.

Die Gitterstruktur kann in verschiedener Form gestaltet sein. Es wird bevorzugt, dass die Gitterstruktur (c) ein Reliefgitter mit beliebigem Profil, beispielsweise mit Rechteck-, Dreieck- oder halbkreisförmigem Profil, oder ein Phasen- oder Volumengitter mit einer periodischen Modulation des Brechungsindexes in der im wesentlichen planaren optisch transparenten Schicht (a) ist.

Eine Weiterentwicklung der Anordnung ist dadurch gekennzeichnet, dass zwischen der optisch transparenten Schicht (a) und den immobilisierten biologischen oder biochemischen oder synthetischen Erkennungselementen eine dünne Metallschicht, vorzugsweise aus Gold oder Silber, gegebenenfalls auf einer zusätzlichen dielektrischen Schicht mit niedrigerem Brechungsindex als der Schicht (a), beispielsweise aus Siliciumdioxid oder Magnesiumfluorid, aufgebracht ist, wobei die Dicke der Metallschicht und der eventuellen weiteren Zwischenschicht so ausgewählt ist, dass ein Oberflächenplasmon bei der Anregungswellenlänge und / oder der Lumineszenzwellenlänge angeregt werden kann.

In einer Ausführungsform der Anordnung wird bevorzugt, dass die Gitterstruktur (c) ein diffraktives Gitter mit einer einheitlichen Periode ist.

Für bestimmte Anwendungen, beispielsweise um gleichzeitig Anregungslicht unterschiedlicher Wellenlänge einzukoppeln, kann es jedoch von Vorteil sein, wenn die Gitterstruktur (c) ein multidiffraktives Gitter ist.

In der Regel wird bevorzugt, dass sich die Gitterstrukturen (c) und gegebenenfalls zusätzlich vorhandenen Gitterstukturen (c') innerhalb des Bereichs der Flusszellen befinden.

Sofern beispielsweise jedoch äußerst kleine Probenvolumina auf einer sehr kleinen Grundfläche eingesetzt werden sollen, kann es von Vorteil sein, wenn sich die Gitterstrukturen (c) und gegebenenfalls zusätzlich vorhandenen Gitterstukturen (c') außerhalb des Bereichs der Flusszellen befinden.

Für Anwendungen, in denen eine möglichst große Anzahl von Messbereichen in einer Flusszelle vorgesehen ist und zugleich eine Ausbreitung des Anregungslichts in benachbarte Flusszellen, in Ausbreitungsrichtung des geführten Anregungslichts, durch dessen kontrollierte Auskopplung verhindert werden soll, wird bevorzugt, dass sich die Gitterstrukturen (c) innerhalb des Bereichs der Flusszellen und zusätzlich vorhandene Gitterstrukturen (c') jeweils außerhalb der Flusszellen, in denen jeweils die Einkopplung des Anregungslichts erfolgt, befinden.
Insbesondere können, bei sequentieller Durchführung von Messungen in verschiedenen Flusszellen, die Gitterstrukturen so angeordnet sein, dass das Anregungslicht über eine Gitterstruktur (c) innerhalb einer Flusszelle eingekoppelt wird, es diese durchläuft und in die wellenleitende Schicht in eine in Ausbreitungsrichtung des geführten Anregungslichts benachbarte Flusszelle übertritt, wo es mittels einer dort vorhandenen Gitterstruktur (c') ausgekoppelt wird. Durch Verschiebung der Anordnung kann in einer nachfolgenden Messung die letztgenannte Gitterstruktur (c') ihrerseits als ein Einkopplungsgitter benutzt werden.

Es sind auch weitere Ausführungsformen der erfindungsgemäßen Anordnung vorgesehen, welche dadurch gekennzeichnet sind, dass sich Gitterstrukturen (c) und gegebenenfalls zusätzlich vorhandene Gitterstrukturen (c') über den Bereich mehrerer oder alle Flusszellen erstrecken.

Es können sich auch mehrere Gitterstrukturen (c) und (c') innerhalb einer einzigen Flusszelle für sequentielle Messungen innerhalb einer einzelnen Flusszelle befinden.

Für die meisten Anwendungen der Anordnung wird bevorzugt, dass das Material des mit der Grundplatte zusammengebrachten Körpers an der Auflageoberfläche zu der Grundplatte mindestens in der Eindringtiefe des evaneszenten Feldes sowohl für die Anregungsstrahlung als auch für eine oder mehrere gegebenenfalls angeregte Lumineszenzstrahlungen transparent ist.

Eine Weiterentwicklung besteht darin, dass das Material des mit der Grundplatte zusammengebrachten Körpers als zweilagige Schicht vorliegt, deren erste Schicht, welche mit der Oberfläche der Grundplatte in Kontakt gebracht wird, sowohl für die Anregungsstrahlung als auch für eine oder mehrere gegebenenfalls angeregte Lumineszenzstrahlungen transparent ist, während die dann anschließende, sich im weiteren Abstand von der Grundplatte befindliche Schicht im Spektralbereich der Anregungsstrahlung und der gegebenenfalls angeregten Lumineszenzstrahlungen absorbierend wirkt.

Wenn ein optisches Übersprechen von Anregungslicht zwischen benachbarten Probenbehältnissen minimiert werden soll, ist es von Vorteil, die Wellenleitung durch Kontaktieren des Wellenleiters mit einem absorbierenden Material in den Zwischenbereichen zwischen den Flusszellen zu unterbinden oder weitestgehend zu vermindern. Dieses ist insbesondere dann von Vorteil, wenn Lichtein- und auskopplung durch Gitterstrukturen (c) bzw (c') innerhalb der Flusszellen erfolgen, oder wenn eine großflächige Gitterstruktur sich über eine Vielzahl von Flusszellen erstreckt und großflächig mit Anregungslicht beleuchtet wird. Eine solche Weiterentwicklung der Anordnung ist dadurch gekennzeichnet, dass das Material der mit der Grundplatte in Kontakt stehenden Schicht im Spektralbereich der Anregungsstrahlung und der gegebenenfalls angeregten Lumineszenzstrahlungen absorbierend ist.

Es ist von Vorteil, wenn das Material der mit der Grundplatte in Kontakt stehenden Schicht auf der Sensorplattform selbsthaftend und dicht verschließend ist. Bevorzugt wird dabei, dass das Material der mit der Grundplatte in Kontakt stehenden Schicht aus einem Polysiloxan besteht.

Mit der erfindungsgemäßen Anordnung soll eine Vielzahl von Analyten gleichzeitig in einer Probe bestimmt werden können. Daher ist es von Vorteil, wenn sich in einer Flusszelle 5 - 5000, bevorzugt 10 - 400 Messbereiche befinden.

In einer Weiterentwicklung wird bevorzugt, dass auf der Grundplatte optisch oder mechanisch erkennbare Markierungen zur Erleichterung der Justierung in einem optischen System und / oder zur Verbindung mit dem die Ausnehmungen für die Flusszellen enthaltenden Körper aufgebracht sind.

Weiterer Gegenstand der Erfindung ist ein analytisches System zur Bestimmung eines oder mehrerer Analyten, mit einer Anordnung nach einer der vorgenannten Ausführungsformen, Vorkehrungen zur lokal adressierten Zuleitung von Proben oder Reagentien zu den Probenbehältnissen besagter Anordnung sowie mindestens einem Detektor zur Erfassung einer Änderung einer Messgröße aufgrund der Anwesenheit des einen oder der mehreren Analyten, bei welcher Messgröße es sich vorzugsweise um eine optische, elektrische, elektrochemische oder thermische Nachweisgröße oder das Signal einer radioaktiven Strahlung handelt.

Gegenstand der Erfindung ist ebenso ein analytisches System zur Bestimmung einer oder mehrerer Lumineszenzen, mit einer Anordnung nach einer der vorgenannten Ausführungsformen, Vorkehrungen zur lokal adressierten Zuleitung von Proben oder Reagentien zu den Probenbehältnissen besagter Anordnung, mindestens einer Anregungslichtquelle und mindestens einem Detektor zur Erfassung des von dem mindestens einem oder mehreren Messbereichen (d) auf der Sensorplattform ausgehenden Lichts.

Bevorzugt wird ein analytisches System zur Bestimmung eines oder mehrerer Analyten, mit einer Anordnung nach einer der vorgenannten Ausführungsformen, Vorkehrungen zur lokal adressierten Zuleitung von Proben oder Reagentien zu den Probenbehältnissen besagter Anordnung, mindestens einer Anregungslichtquelle und mindestens einem Detektor zur Erfassung einer Änderung von optischen Nachweisgrößen, wobei es sich vorzugsweise um eine Änderung des Brechungsindexes und / oder einer oder mehrerer Lumineszenzen in der Umgebung des einen oder der mehreren Analyten handelt.

Eine mögliche Ausführungsform des analytischen Systems ist dadurch gekennzeichnet, dass die Einstrahlung des Anregungslichts zu den Messbereichen (d) in einer Auflichtoder Transmissionsanordnung erfolgt.

Für bestimmte Anwendungen ist es von Vorteil, dass die Einstrahlung des Anregungslichts zu den Messbereichen (d) und die Erfassung des Messlichts von den Messbereichen (d) auf gegenüberliegenden Seiten der Grundplatte erfolgen.

Für eine größere Zahl von Anwendungen wird bevorzugt, dass die Einstrahlung des Anregungslichts zu den Messbereichen (d) und die Erfassung des Messlichts von den Messbereichen (d) auf der gleichen Seite der Grundplatte erfolgen.

Eine besondere Ausführungsform ist dadurch gekennzeichnet, dass die Einstrahlung des Anregungslichts zu den Messbereichen (d) und die Erfassung des Messlichts von den Messbereichen (d) in einer konfokalen Anordnung erfolgen.

In einer Ausführungsform des analytisches System mit einer erfindungsgemäßen Anordnung von Probenbehältnissen mit einem optischen Schichtwellenleiter wird bevorzugt, dass die Anregungslichtstrahlen einer Wellenlänge in einer gemeinsamen Ebene liegen, die durch den Resonanzwinkel für die Einkopplung des Anregungslichts besagter Anregungswellenlänge in die optisch transparente Schicht (a) mit einem optischen Koppelelement definiert ist.

Für die gleichzeitige Detektion von Signalen von einer Vielzahl von Messbereichen wird bevorzugt, dass zur Detektion mindestens ein ortsauflösender Detektor verwendet wird, welcher vorzugsweise ausgewählt ist aus der Gruppe, die von CCD-Kameras, CCD-Chips, Photodioden-Arrays, Avalanche-Dioden-Arrays, Multichannelplates und Vielkanal-Photomuliplier gebildet wird.

Die Erfindung umfasst analytische Systeme, die dadurch gekennzeichnet sind, dass zwischen der einen oder mehreren Anregungslichtquellen und der Grundplatte, als Bestandteil einer erfindungsgemäßen Anordnung, und /oder zwischen besagter Grundplatte und dem einen oder mehreren Detektoren optische Komponenten aus der Gruppe verwendet werden, die von Linsen oder Linsensystemen zur Formgestaltung der übertragenen Lichtbündel, planaren oder gekrümmten Spiegeln zur Umlenkung und gegebenenfalls zusätzlich zur Formgestaltung von Lichtbündeln, Prismen zur Umlenkung und gegebenenfalls zur spektralen Aufteilung von Lichtbündeln, dichroischen Spiegeln zur spektral selektiven Umlenkung von Teilen von Lichtbündeln, Neutralfiltern zur Regelung der übertragenen Lichtintensität, optischen Filtern oder Monochromatoren zur spektral selektiven Übertragung von Teilen von Lichtbündeln oder polarisationsselektiven Elementen zur Auswahl diskreter Polarisationsrichtungen des Anregungs- oder Lumineszenzlichts gebildet werden.

Die Lichtanregung kann kontinuierlich erfolgen. Es wird jedoch bevorzugt, dass die Einstrahlung des Anregungslichts in Pulsen mit einer Dauer zwischen 1 fsec und 10 Minuten erfolgt.

Eine Weiterentwicklung des analytischen Systems ist dadurch gekennzeichnet, dass das Emissionslicht aus den Messbereichen zeitlich aufgelöst gemessen wird.

Es wird bevorzugt, dass zur Referenzierung des verfügbaren Anregungslichts Lichtsignale aus der Gruppe gemessen werden, die von Anregungslicht am Ort der Lichtquellen oder nach ihrer Aufweitung oder nach ihrer Unterteilung in Teilstrahlen, Streulicht bei der Anregungswellenlänge aus dem Bereich der einen oder mehreren räumlich getrennten Messbereiche, und über die Gitterstrukturen (c) oder (c') ausgekoppeltem Licht der Anregungswellenlänge gebildet werden.

Besonders bevorzugt wird, dass die Messbereiche zur Bestimmung des Emissionslichts und des Referenzsignals identisch sind.

In einer Ausführungsform des erfindungsgemäßen analytischen Systems erfolgen Einstrahlung und Erfassung des Emissionslichts von allen Messbereichen simultan. Eine andere Ausführungsform ist dadurch gekenzeichnet, dass die Einstrahlung des Anregungslichts auf und Detektion des Emissionslichts von einem oder mehreren Messbereichen sequentiell für einzelne oder mehrere Flusszellen erfolgt.

Es ist auch möglich, dass innerhalb einer einzelnen Flusszelle mehrfach sequentiell Einstrahlung des Anregungslichts und Detektion des Emissionslichts von einem oder mehreren Messbereichen erfolgen.

Bevorzugt wird dabei, dass sequentielle Anregung und Detektion unter Verwendung beweglicher optischer Komponenten erfolgt, die aus der Gruppe von Spiegeln, Umlenkprismen und dichroischen Spiegeln gebildet wird.
Insbesondere wird bevorzugt, dass sequentielle Anregung und Detektion unter Verwendung eines im wesentlichen winkel- und fokusgetreuen Scanners erfolgt.

Eine andere Ausführungsform eines analytischen Systems mit sequentieller Anregung und Detektion ist dadurch gekennzeichnet, dass die erfindungsgemäße Anordnung zwischen Schritten der sequentiellen Anregung und Detektion bewegt wird.

Weiterer Gegenstand der Erfindung ist ein Verfahren zur Herstellung einer Anordnung von Probenbehältnissen in einem ein- oder zweidimensionalen Array, umfassend eine Grundplatte und einen damit derart zusammengebrachten Körper, dass zwischen der Grundplatte und besagtem Körper ein Array von räumlichen Aussparungen zur Erzeugung eines Arrays von Flusszellen mit jeweils mindestens einem Zulauf und mindestens einem Ablauf erzeugt wird, gekennzeichnet dadurch, dass mindestens ein Ablauf jeder Flusszelle in ein mit dieser Flusszelle fluidisch verbundenes Reservoir führt, welches aus der Flusszelle austretende Flüssigkeit aufnehmen kann, wobei besagte Grundplatte und besagter Körper derart zusammengefügt werden, dass verschiedene besagter räumlicher Aussparungen gegeneinander fluidisch abgedichtet sind. Dabei soll besagtes Rservoir in der Aussenwand des mit der Grundplatte zusammenngebrachten Körpers ausgebildet und über oder oberhalb besagter Aussparungen angeordnet sein.

Eine mögliche Ausführungsform des Verfahrens besteht darin, dass die Grundplatte und der damit zusammengebrachte Körper irreversibel zusammengefügt werden. Dabei wird bevorzugt, dass die Grundplatte und der damit zusammengebrachte Körper miteinander verklebt werden.

Dabei wird ein Klebstoff bevorzugt, der zumindest bei der Anregungswellenlänge möglichst hohe Transparenz und unter den Anregungsbedingungen möglichst niedrige Fluoreszenz, im Idealfall Fluoreszenzfreiheit, aufweist. Für Anwendungen, bei denen das Anregungslicht jeweils auf ein einziges Probenbehältnis beschränkt werden soll, kann es allerdings auch vorteilhaft sein, wenn der Klebstoff bei der Anregungswellenlänge absorbierend, z. B. schwarz, aber möglichst wiederum fluoreszenzarm, im Idealfall fluoreszenzfrei, ist. Des weiteren gelten für den Klebstoff ähnliche Materialanforderungen wie für das Material des mit der Grundplatte zusammengebrachten Körpers, d. h. chemische und physikalische Beständigkeit, zum Beispiel gegen saure oder basische Medien, Salze, Alkohole oder Detergentien als Bestandteile von wässrigen Lösungen, oder Formamid sowie Temperaturbeständigkeit. Selbstverständlich muss der Klebstoff gleichzeitig abgestimmt sein auf die chemischen Oberflächeneigenschaften der zusammenzufügenden Materialien. Es dürfen auch keine chemischen Reaktionen mit Analyten und / oder den immobilisierten Erkennungselementen stattfinden.

Sofern die biologischen oder biochemischen oder synthetischen Erkennungselemente für den Analytnachweis vor der Zusammenfügung mit besagtem Körper auf der Grundplatte aufgebracht werden, ist bei der Auswahl des Klebstoffes auch die Verträglichkeit des zu seiner Aushärtung notwendigen Verfahrens mit der Stabilität besagter Erkennungselemente zu berücksichtigen. Dieses schließt in der Regel solche Klebstoffe aus, zu deren Aushärtung der Einsatz sehr kurzwelliger UV-Strahlung (z. B. unter 280 nm), hoher Temperaturen (z. B. über 100°C), insbesondere über längere Zeiträume (z. B. > 2 Stunden) notwendig ist. Dabei sind die Auswahlregeln bei der Verwendung von Proteinen wie z. B. Antikörpern als Erkennungselementen in der Regel enger als bei der Verwendung von Nukleinsäuren.

Die Grundplatte und der damit zusammengebrachte Körper können auch reversibel zusammengefügt werden, beispielsweise durch Einklinken mittels geeigneter Vorkehrungen an besagtem Körper, wie beispielsweise Widerhaken, oder durch Einschieben in vorhandene Führungsnuten. Ein wesentliches Kriterium bei der Auswahl des Verfahrens für das Zusammenfügen der Grundplatte mit besagtem Körper ist, dass nach dessen Abschluss benachbarte Flusszellen gegeneinander fluidisch abgedichtet sind. Die Abdichtung kann optional durch Verwendung von verformbaren Dichtungsmaterialien, beispielsweise durch Abschluss besagten Körpers in Richtung Grundplatte durch ein elastisches Material als Bestandteil eines Zwei- oder Mehrkomponentensystems besagten Körpers, oder in Form von Dichtungsringen ("O-Ringen"), unterstützt werden. Auch die Verwendung einer Diffusionssperre, in Form einer Ausnehmung der mit der Grundplatte in Kontakt gebrachten Trennwand zwischen benachbarten Flusszellen, kann für diesen Zweck vorgesehen sein.

Bestandteil der Erfindung ist ein Verfahren zum Nachweis eines oder mehrerer Analyten in einer oder mehreren flüssigen Probe mit einer Anordnung und einem analytischen System nach jeweils einer der vorgenannten Ausführungsformen, wobei den Probenbehältnissen Proben- und gegebenenfalls weitere Reagensflüssigkeiten zugeführt werden und diese in ein mit einer Flusszelle fluidisch verbundenes Reservoir, als Bestandteil besagter Probenbehältnisse, austreten können.

Eine Weiterentwicklung des Verfahrens besteht darin, dass auf der Grundplatte besagter Anordnung biologische oder biochemische oder synthetische Erkennungselemente zum Nachweis eines oder mehrerer Analyten immobilisiert sind, Anregungslicht zu den Messbereichen auf besagter Grundplatte geleitet wird und das von besagten Messbereichen ausgehende Licht mit mindestens einem Detektor erfasst wird.

Bevorzugt wird dabei ein Verfahren, das dadurch gekennzeichnet ist, dass die Grundplatte einen durchgehenden oder in einzelne Bereiche aufgeteilten optischen Wellenleiter umfasst, Anregungslicht über ein optisches Koppelelement in besagten optischen Wellenleiter geleitet wird und mit einem oder mehreren Detektoren Messlicht von den Messbereichen erfasst wird, welche in optischer Wechselwirkung mit besagtem optischem Wellenleiter stehen.

Besonders bevorzugt wird ein Verfahren, das dadurch gekennzeichnet ist, dass besagter optischer Wellenleiter als optischer Schichtwellenleiter ausgebildet ist mit einer ersten optisch transparenten Schicht (a) auf einer zweiten optisch transparenten Schicht (b) mit niedrigerem Brechungsindex als Schicht (a), dass weiterhin Anregungslicht mithilfe einer oder mehrerer Gitterstrukturen, welche in der optisch transparenten Schicht (a) ausgeprägt sind, in die optisch transparente Schicht (a) eingekoppelt und zu darauf befindlichen Messbereichen (d) als geführte Welle geleitet wird, und dass weiterhin die im evaneszenten Feld besagter geführter Welle erzeugte Lumineszenz von lumineszenzfähigen Molekülen mit einem oder mehreren Detektoren erfasst und die Konzentration eines oder mehrerer Analyten aus der Intensität dieser Lumineszenzsignale bestimmt wird.

Im Falle von Anordnungen mit Gitterstrukturen (c) zur Einkopplung von Anregungslicht und zusätzlich vorhandenen Gitterstrukturen (c') zur Auskopplung von in der wellenleitenden Schicht geführten Lichts kann die Einkopplung optimiert werden, indem das mit einer Gitterstruktur (c') ausgekoppelte Anregungslicht direkt oder nach Strahlumlenkung mittels zusätzlich vorhandener Spiegel oder Prismen und gegebenenfalls nach Fokussierung mittels einer geeigneten Linse auf einen Detektor, z. B. eine Photodiode angeschlossen an einen Verstärker, geleitet wird. Dabei wird bevorzugt, dass das Anregungslicht auf der ganzen Breite (Dimension senkrecht zur Ausbreitungsrichtung des geführten Anregungslichts in der Ebene der wellenleitenden Schicht) ausgekoppelt und auf die lichtempfindliche Fläche des Detektors fokussiert wird. Eine optimale Einkopplung ist dann erreicht, wenn das von diesem Detektor erzeugte Signal des ausgekoppelten Lichts seinen Maximalwert erreicht.

Insbesondere wird bevorzugt, dass (1) die isotrop abgestrahlte Lumineszenz oder (2) in die optisch transparente Schicht (a) eingekoppelte und über die Gitterstruktur (c) ausgekoppelte Lumineszenz oder Lumineszenzen beider Anteile (1) und (2) gleichzeitig gemessen werden.

Bestandteil des erfindungsgemäßen Verfahrens ist, dass zur Erzeugung der Lumineszenz ein Lumineszenzfarbstoff oder lumineszentes Nanopartikel als Lumineszenzlabel verwendet wird, das bei einer Wellenlänge zwischen 300 nm und 1100 nm angeregt werden kann und emittiert.

Es wird bevorzugt, dass das Lumineszenzlabel an den Analyten oder in einem kompetitiven Assay an einen Analogen des Analyten oder in einem mehrstufigen Assay an einen der Bindungspartner der immobilisierten biologischen oder biochemischen oder synthetischen Erkennungselemente oder an die biologischen oder biochemischen oder synthetischen Erkennungselemente gebunden ist.

Eine andere Ausführungsform des Verfahrens ist dadurch gekennzeichnet, dass ein zweites oder noch weitere Lumineszenzlabel mit gleicher oder unterschiedlicher Anregungswellenlänge wie das erste Lumineszenzlabel und gleicher oder unterschiedlicher Emissionswellenlänge verwendet werden.

Dabei wird bevorzugt, dass das zweite oder noch weitere Lumineszenzlabel bei der gleichen Wellenlänge wie der erste Lumineszenzfarbstoff angeregt werden kann, aber bei anderen Wellenlängen emittieren.

Insbesondere ist von Vorteil, wenn die Anregungsspektren und Emissionsspektren der eingesetzten Lumineszenzfarbstoffe nur wenig oder gar nicht überlappen.

Eine Variante des Verfahrens besteht darin, dass zum Nachweis des Analyten Ladungsoder optischer Energietransfer von einem als Donor dienenden ersten Lumineszenzfarbstoff zu einem als Akzeptor dienenden zweiten Lumineszenzfarbstoff verwendet wird.

Eine andere Ausführungsform des Verfahrens ist dadurch gekennzeichnet, dass neben der Bestimmung einer oder mehrerer Lumineszenzen Änderungen des effektiven Brechungsindex auf den Messbereichen bestimmt werden.

Eine Weiterentwicklung des Verfahrens ist dadurch gekennzeichnet, dass die einen oder mehreren Lumineszenzen und / oder Bestimmungen von Lichtsignalen bei der Anregungswellenlänge polarisationsselektiv vorgenommen werden.

Es wird bevorzugt, dass die einen oder mehreren Lumineszenzen bei einer anderen Polarisation als der des Anregungslichts gemessen werden.

Bestandteil der Erfindung ist ein Verfahren nach einer der vorgenannten Ausführungsformen zur gleichzeitigen oder sequentiellen, quantitativen oder qualitativen Bestimmung eines oder mehrerer Analyten aus der Gruppe von Antikörpern oder Antigenen, Rezeptoren oder Liganden, Chelatoren oder "Histidin-tag-Komponenten", Oligonukleotiden, DNA- oder RNA-Strängen, DNA- oder RNA-Analoga, Enzymen, Enymcofaktoren oder Inhibitoren, Lektinen und Kohlehydraten.

Mögliche Ausführungsformen des Verfahren sind dadurch gekennzeichnet, dass die zu untersuchenden Proben beispielsweise natürlich vorkommende Körperflüssigkeiten wie Blut, Serum, Plasma, Lymphe oder Urin oder Gewebeflüssigkeiten oder Eigelb sind.

Andere Ausführungsformen sind dadurch gekennzeichnet, dass die zu untersuchende Probe eine optisch trübe Flüssigkeit, Oberflächenwasser, ein Boden- oder Pflanzenextrakt, eine Bio- oder Syntheseprozessbrühe ist.

Es ist auch möglich, dass die zu untersuchenden Proben aus biologischen Gewebeteilen entnommen sind.

Weiterer Gegenstand der Erfindung ist die Verwendung eines erfindungsgemäßen Verfahrens zu quantitativen oder qualitativen Analysen zur Bestimmung chemischer, biochemischer oder biologischer Analyten in Screeningverfahren in der Pharmaforschung, der Kombinatorischen Chemie, der Klinischen und Präklinischen Entwicklung, zu Echtzeitbindungsstudien und zur Bestimmung kinetischer Parameter im Affinitätsscreening und in der Forschung, zu qualitativen und quantitativen Analytbestimmungen, insbesondere für die DNA- und RNA-Analytik und die Bestimmung von genomischen oder proteomischen Unterschieden im Genom, wie beispielsweise Einzelnukleotid-Polymorphismen, zur Messung von Protein-DNAwechselwirkungen, zur Bestimmung von Steuerungsmechanismen für die m-RNA-Expression und für die Protein(bio)synthese, für die Erstellung von Toxizitätsstudien sowie für die Bestimmung von Expressionsprofilen, insbesondere zur Bestimmung von biologischen und chemischen Markerstoffen, wie mRNA, Proteinen, Peptiden oder niedermolekularen organischen (Boten-)Stoffen, sowie zum Nachweis von Antikörpern, Antigenen, Pathogenen oder Bakterien in der pharmazeutischen Protduktforschung und - entwicklung, der Human- und Veterinärdiagnostik, der Agrochemischen Produktforschung und -entwicklung, der symptomatischen und präsymptomatischen Pflanzendiagnostik, zur Patientenstratifikation in der pharmazeutischehn Produktentwicklung und für die therapeutische Medikamentenauswahl, zum Nachweis von Pathogenen, Schadstoffen und Erregern, insbesondere von Salmonellen, Prionen, Viren und Bakterien, insbesondere in der Lebensmittel- und Umweltanalytik.

### Ausführungsbeispiele

Die erfindungsgemäße Anordnung wird in den folgenden Figuren beispielhaft, ohne Einschränkung des Gegenstands der Erfindung, beschrieben.

Figur 1 zeigt eine Querschnitts-Teilansicht, welche den Zulauf und den Ablauf einer einzelnen Flusszelle sowie Teile der benachbarten Flusszellen umfasst.

Figur 2 entspricht der Querschnitts-Teilansicht von Figur 1 für eine andere Ausführungsform der erfindungsgemäßen Anordnung.

Figur 3 zeigt eine auf die Grundplatte beschränkte Querschnittsteilansicht für eine Ausführungsform mit einem optischen Schichtwellenleiter als Grundplatte.

Figur 4 zeigt eine Anordnung, in der spaltenförmige Anordnungen von Grundplatten und den jeweils damit zusammengebrachten Körpern (gemäß der Ausführungsform von Figur 2), zur Erzeugung von beispielsweise insgesamt 6 Spalten von je 6 Flusszellen, ihrerseits in einen gemeinsamen Träger ("Metaträger") eingefügt sind.

### Beispiel 1

Vorteilhaft sind die erfindungsgemäßen Anordnungen von Probenbehältnissen so ausgestaltet, dass sie stapelbar sind und Vorkehrungen zur Vermeidung einer Verschmutzung der Grundplatten 4 durch Kontakt mit der Umgebung umfassen.

Die Anordnung gemäss Figur 1 umfasst eine Grundplatte 4 und einen damit zusammengebrachten Körper 6. Der Körper 6 besitzt eine Ausnehmung 3, welche nach Zusammenfügen mit der Grundplatte eine räumliche Aussparung zur Erzeugung einer Flusszelle mit Zulauf 1 und Ablauf 2 bildet. Die Ausnehmung 3 kann eine beliebige Grundfläche haben; beispielsweise kann sie rechteckig sein. Vorzugsweise sind Ecken jeweils abgerundet (in den Figuren nicht dargestellt). Die Durchmesser und Querschnittsflächen von Zuläufen 1 und Abläufen 2 können gleich oder unterschiedlich und zwischen der Eintrittsöffnung für die Flüssigkeitszugabe und dem Eintritt in die erzeugte räumliche Aussparung 3 bzw. dem Austritt aus der räumlichen Aussparung 3 und dem Eintritt in das mit dieser Flusszelle fluidisch verbundene Reservoir 5 jeweils gleichbleibend oder veränderlich sein.

Zur Verringerung der notwendigen Proben- oder Reagentienvolumina bei der Befüllung der Flusszellen kann es vorteilhaft sein, den Zulaufabschnitt 1 so zu verbreitern, dass auch Pipettenspitzen größeren Durchmessers in diesen eingeführt werden können, und am unteren Ende des so erweiterten Zulaufs zu der Ausnehmung 3 besagten Zulauf bis auf eine enge Eintrittsöffnung geschlossen zu gestalten. Diese Eintrittsöffnung kann zusätzlich von einer niedrigeren Umrandungswand innerhalb des Zulaufabschnitts 1 umgeben sein (nicht dargestellt). Eine zusätzliche Abdichtung dieses Zulaufs 1 gegen benachbarte Reservoirs 5 kann beispielsweise dadurch erfolgen, dass durch einen Druckkontakt eines weicheren Materials einer konisch (spitz) zulaufenden Pipette mit einem härteren Wandmaterial des Körpers 6 (inbesondere der Wände des Zulaufs 1) eine Dichtungsfunktion erfüllt wird.

Um auch größere Pipettenspitzen für die Befüllung einsetzen zu können, kann es außerdem von Vorteil sein, wenn das Raster der Reservoirs 5 gegenüber dem Raster der Flusszellen mit ihren Ausnehmungen 3 und den zugehörigen Eintrittsöffnungen von den Zuläufen 1 derart versetzt ist, dass sich die Eintrittsöffnungen jeweils am Rand oder einer Ecke einer Ausnehmung 3 befinden (wie in Figur 1 dargestellt), jedoch die Wände (als Teil des Körpers 6) zum nächsten Reservoir 5 in Richtung zur nächsten Flusszelle verschoben sind. Dieses kann der Vermeidung nicht durchströmter Totvolumina in den Ausnehmungen 3 bei gleichzeitig niedrigen, zur Befüllung benötigten, Flüssigkeitsvolumina dienen.

Zur Erleichterung der Befüllung kann beispielsweise der Zulauf 1 konisch gestaltet sein, so dass eine in diesen eindringende Spitze in diesem in Richtung der Eintrittsöffnung zur Ausnehmung 3 geführt wird. Die Führung kann durch zusätzliche mechanisch strukturierte Hilfen, z. B. durch Furchen oder Rippen in einer (konischen) Zulaufsöffnung in Richtung besagter Eintrittsöffnung, noch weiter erleichtert werden. Es können auch konzentrische Ringstrukturen in der Wand des Zulaufs als Zentrierhilfen vorgesehen sein.

Außerdem kann die Befüllbarkeit dadurch erleichtert und die Ausbildung von Luftblasen bei der Befüllung daduch vermieden werden, dass einer zuzugebenden Proben- oder Reagentienflüssigkeit Verbindungen, wie beispielsweise Detergentien, beigemischt werden, welche die Oberflächenspannung dieser zugeführten Flüssigkeiten und damit den Kontakwinkel zu den Wänden der Flusszellen vermindern, oder dass diese Wände des Körpers 6 selbst durch chemische oder physikalische Oberflächenbehandlung, z. B. durch Plasmabehandlung, so verändert werden, dass es zu einer Verminderung des Kontaktwinkels und damit zu einer besseren Benetzbarkeit kommt.

Der Ablauf 2 bzw. der Zulauf 1 der in Querschnittsrichtung benachbarten Flusszellen sind ebenfalls dargestellt. Vorzugsweise sind der Zulauf und der Ablauf einer Flusszelle jeweils an einander gegenüberliegenden Endpunkten der Grundflächen der Ausnehmung, im Falle einer im wesentlichen rechteckförmigen Grundfläche beispielweise an den Endpunkten der Diagonalen, angeordnet.

Um eine gleichmäßigere Befüllung und Befüllgeschwindigkeit bzw. Oberflächenbenetzung der Grundplatte 4 (zur Vermeidung eines parabolischen Strömungsprofils in der zu Figur 1 senkrechten Querschnittsebene) zu ermöglichen, kann es von Vorteil sein, wenn die Ausnehmungen 3 senkrecht zum Abbildungsquerschnitt eine größere Tiefe aufweisen, der Strömungsquerschnitt also nicht rechteckig oder elliptisch ist, sondern an den Rändern vergrößert ist. Damit kann eine gleichmäßigere Strömungsgeschwindigkeit im Querschnitt erreicht und die Ausbildung von Totvolumina in den Randbereichen wiederum vermindert werden

### Beispiel 2

Figur 2 zeigt eine andere Ausführungsform der erfindungsgemässen Anordnung, in der das Reservoir 5 als eine Vertiefung in der Außenwand des mit der Grundplatte 4 zusammengebrachten Körpers ausgebildet ist. Diese Ausführungsform ermöglicht es, dass aus der Flusszelle austretende Flüssigkeit zwar in das Reservoir 5 eintreten, aber nicht wieder in die Flusszelle zurückfließen kann, solange das Reservoir nicht bis zu der Oberkante der Berandung an der Flüssigkeitsaustrittsseite aufgefüllt ist.

### Beispiel 3

Figur 3 zeigt beispielhaft eine erfindungsgemäße Anordnung, in der die Grundplatte als ein optischer Schichtwellenleiter mit darauf immobilisierten biologischen oder biochemischen Erkennungselementen ausgebildet ist. Mit "g " sind hier die Begrenzungen einer Flusszelle bezeichnet, welche durch Zusammenbringen der Grundplatte mit einem Körper 6 gemäß den vorangehend beschriebenen Beispielen erzeugt wird. "g" entspricht daher der Bezugsgröße "6" in den Figuren 1 und 2.

Auf einer zumindest in einem Teil des sichtbaren oder nahen infraroten Spektrums transparenten Schicht (b) ist zunächst eine dünne Zwischenschicht (b') und anschliessend eine Schicht (a) aufgebracht, deren Brechungsindex größer als die Brechungsindices der Schichten (b) und (b') ist. Auch die Schichten (a) und (b') sind mindestens in einem Teil des sichtbaren oder nahen infraroten Spektrums optisch transparent. In der Schicht (b) sind Gitterstrukturen (c) und (c') als Reliefgitter ausgebildet, welche bei der Aufbringung der darüber befindlichen Schichten in diese übertragen werden. Auf die Schicht (a) wird dann eine Haftvermittlungsschicht (f) aufgebracht, welche die Haftung zu immobilisierender biologischer oder biochemischer oder synthetischer Erkennungselemente verbessern kann. In dem vorliegenden Beispiel sind diese Erkennungselemente in räumlich getrennten Messbereichen (d) immobilisiert, welche in dieser Ausführungsform sowohl auf als auch zwischen den Gitterstrukturen (c) und (c') angeordnet sind. In dem vorliegenden Beispiel wird abschließend die Grundplatte mit dem Körper (g) (entsprechend "6" in der Bezeichnung für die Figuren 1 und 2) zusammengebracht.

### Beispiel 5

Figur V zeigt eine Anordnung, in der spaltenförmige Anordnungen von Grundplatten und den jeweils damit zusammengebrachten Körpern (gemäß der Ausführungsform von Beispiel 2), zur Erzeugung von insgesamt 6 Spalten von je 6 Flusszellen, ihrerseits in einen gemeinsamen Träger ("Metaträger") eingefügt sind. Die spaltenförmigen Grundplatten 4 und damit zusammengebrachten Körper 6 bilden zusammen Einsatzblöcke 7, welche in den Metaträger 8 eingesetzt sind.

Im dargestellten Beispiel hat der Metaträger die Grundabmessungen einer Standard-Mikrotiterplatte. Die Einlassöffnungen 9 zu den Zuläufen 1 (in dieser Figur nicht erkennbar) sind so positioniert, dass sie mit dem Raster einer 96-er Standard-Mikrotiterplatte kompatibel sind, d.h., sie sind in Abständen von jeweils einem ganzzahligen Vielfachen von 9 mm positioniert (in diesem Beispiel: Abstand der Zuläufe innerhalb einer Spalte: 9 mm; Abstand der Zuläufe zwischen benachbarten Spalten: 18 mm). Bei entsprechender Translation des Metaträgers mit den Einsatzblöcken sind entsprechend die Reservoirs 5 mit dem Raster einer standardmäßigen 96-er Mikrotiterplatte kompatibel.

In dem vorliegenden Beispiel ist der Metaträger 8 so gestaltet, dass er bis zu 6 Einsatzblöcke aufnehmen kann. Es können jedoch auch Plätze für Einsatzblöcke unbesetzt bleiben.

Die Einfügung der Einsatzblöcke in den Metaträger kann durch mechanische Hilfen, wie mechanische Anschlagpunkte oder -wände, mechanische Zentrierhilfen, wie z. B. mechanische Führungen sowie durch optische Markierungen, gegebenenfalls auch für eine automatisierte Form der Montage in den Metaträger, erleichtert werden.

Das Zusammenfügen der Anordnung der Probenbehältnisse mit dem Metaträger kann beispielsweise durch Kleben oder durch genaue Anpassung ohne Kleben erfolgen, wenn er für den einmaligen Gebrauch vorgesehen ist, oder beispielsweise durch Einklinken oder Einschieben in eine geeignet ausgebildete Halterung, wenn er für mehrfachen Gebrauch vorgesehen ist.

Das vorliegende Beispiel zeigt eine Ausführungsform eines wiederverwendbaren Metaträgers, in den die Einsatzblöcke 7 über einen Befestigungsmechanismus eingesetzt und aus dem sie nach Durchführung einer Messung wieder entfernt werden können. Vorzugsweise sind die Einsatzblöcke 7 mit Zeilen oder Spalten von Flusszellen sowie die zugehörigen Aufnahmeplätze im Metaträger so beschaffen, dass es für die Einfügung der Einsatzblöcke nur eine einzige eindeutige Orientierung gibt.

## Patentansprüche

1. Anordnung von Probenbehältnissen in einem ein- oder zweidimensionalen Array, umfassend eine Grundplatte (4) und einen damit derart zusammengebrachten Körper (6), dass zwischen der Grundplatte und besagtem Körper ein Array von räumlichen Aussparungen (3) zur Erzeugung eines Arrays von gegeneinander fluidisch abgedichteten Flusszellen mit jeweils mindestens einem Zulauf (1) und mindestens einem Ablauf (2) erzeugt wird, wobei mindestens ein Ablauf (2) jeder Flusszelle in ein mit dieser Flusszelle fluidisch verbundenes Reservoir (5) führt, welches aus der Flusszelle austretende Flüssigkeit aufnimmt, und besagtes Reservoir als eine Vertiefung in der Außenwand des mit der Grundplatte zusammengebrachten Körpers ausgebildet und über oder oberhalb besagter Aussparungen (3) angeordnet ist.

2. Anordnung nach Anspruch 1, **dadurch gekennzeichnet, dass** auf der Grundplatte (4) räumliche Strukturen im Raster des Arrays der zu erzeugenden Flusszellen ausgebildet sind.

3. Anordnung nach einem der Ansprüche 1 - 2, **dadurch gekennzeichnet, dass** zur Erzeugung der räumlichen Aussparungen (3) zwischen der Grundplatte (4) und dem damit zusammengebrachten Körper (6) Ausnehmungen (3) in der Grundplatte (4) ausgebildet sind.

4. Anordnung nach einem der Ansprüche 1 - 3, **dadurch gekennzeichnet, dass** zur Erzeugung der räumlichen Aussparungen (3) zwischen der Grundplatte (4) und dem damit zusammengebrachten Körper (6) Ausnehmungen (3) in besagtem Körper (6) ausgebildet sind.

5. Anordnung nach einem der Ansprüche 1 - 4, **dadurch gekennzeichnet, dass** der mit der Grundplatte (4) zusammengebrachte Körper (6) aus mehreren Teilen zusammengesetzt ist, wobei die zusammengefügten Bestandteile besagten Körpers vorzugsweise eine irreversibel zusammengefügte Einheit bilden.

6. Anordnung nach einem der Ansprüche 1 - 5, **dadurch gekennzeichnet, dass** sie 2 - 2000, vorzugsweise 2 - 400, besonders bevorzugt 2 - 100 Flusszellen umfasst.

7. Anordnung nach einem der Ansprüche 1 - 6, **dadurch gekennzeichnet, dass** das Raster der Zuläufe (1, 9) der Flusszellen dem Raster der Wells einer Standardmikrotiterplatte entspricht.

8. Anordnung, nach einem der Ansprüche 1 - 7, von beispielsweise 2 bis 8 Probenbehältnissen in einer Spalte oder beispielsweise 2 bis 12 Probenbehältnissen in einer Zeile, welche ihrererseits mit einem Träger (8) mit den Abmessungen von Standardmikrotiterplatten derart zusammengefügt werden, dass das Raster der Zuläufe (1, 9) der Flusszellen dem Raster der Wells einer Standardmikrotiterplatte entspricht.

9. Anordnung nach einem der Ansprüche 1 - 8, **dadurch gekennzeichnet, dass** sie durch einen zusätzlichen Abschluss, beispielsweise eine Folie, Membran oder eine Deckplatte, abgeschlossen wird.

10. Anordnung nach einem der Ansprüche 1 - 9, **dadurch gekennzeichnet, dass** das Innenvolumen jeder Flusszelle 0.1 µl - 1000 µl, bevorzugt 1 µl - 20 µl beträgt.

11. Anordnung nach einem der Ansprüche 1 - 10 , **dadurch gekennzeichnet, dass** das Aufnahmevolumen des mit der Flusszelle fluidisch verbundenen Reservoirs (5) größer, vorzugsweise mindestens 5-mal größer als das Innenvolumen der Flusszelle ist.

12. Anordnung nach einem der Ansprüche 1 - 11, **dadurch gekennzeichnet, dass** die Tiefe der Ausnehmungen (3) zwischen der Grundplatte (4) und dem damit zusammengefügten Körper (6) 1 - 1000 µm, bevorzugt 20 - 200 µm beträgt.

13. Anordnung nach einem der Ansprüche 1 - 12, **dadurch gekennzeichnet, dass** die Grundflächen der Ausnehmungen (3) zwischen der Grundplatte (4) und dem damit zusammengefügten Körper (6) jeweils 0.1 mm² - 200 mm², bevorzugt 1 mm² - 100 mm² betragen, wobei die Größe der Ausnehmungen (3) eines Arrays einheitlich oder unterschiedlich sein kann und die Grundflächen eine beliebige, vorzugsweise rechteckoder polygonförmige oder auch andere Geometrie haben.

14. Anordnung nach einem der Ansprüche 1 - 13, **dadurch gekennzeichnet, dass** die Materialien der Grundplatte (4), des mit der Grundplatte zusammengebrachten Körpers (6) sowie eines zusätzlichen Abschlusses nach Anspruch 9 ausgewählt sind aus der Gruppe von form-, spritz- oder fräsbaren Kunststoffen, Metallen, Silikaten, wie zum Beispiel Glas, Quarz oder Keramiken.

15. Anordnung nach einem der Ansprüche 1 - 14, **dadurch gekennzeichnet, dass** auf der Grundplatte (4) biologische oder biochemische oder synthetische Erkennungselemente zum Nachweis eines oder mehrerer Analyten immobilisiert sind.

16. Anordnung nach einem der Ansprüche 1 - 15, **dadurch gekennzeichnet, dass** zur Immobilisierung biologischer oder biochemischer oder synthetischer Erkennungselemente auf der Grundplatte (4) eine Haftvermittlungsschicht (f) aufgebracht ist.

17. Anordnung nach Anspruch 16, **dadurch gekennzeichnet, dass** die Haftvermittlungsschicht (f) eine Stärke von weniger als 200 nm, vorzugsweise von weniger als 20 nm, hat.

18. Anordnung nach einem der Ansprüche 16 - 17, **dadurch gekennzeichnet, dass** die Haftvermittlungsschicht (f) sich aus chemischen Verbindungen aus den Gruppen der Silane, Epoxide, selbstorganisierten funktionalisierten Monoschichten, funktionalisierten Polymeren und Polymergelen zusammensetzt.

19. Anordnung nach einem der Ansprüche 1 - 18, **dadurch gekennzeichnet, dass** biologische oder biochemische oder synthetische Erkennungselemente in räumlich getrennten Messbereichen (d) immobilisiert sind, welche durch räumlich selektive Aufbringung besagter biologischer oder biochemischer oder synthetischer Erkennungselemente auf der Grundplatte (4) erzeugt werden.

20. Anordnung nach Anspruch 19, **dadurch gekennzeichnet, dass** zur Aufbringung der biologischen oder biochemischen oder synthetischen Erkennungselemente auf der Grundplatte (4) eines oder mehrere Verfahren verwendet werden aus der Gruppe von Verfahren, die von Ink jet spotting, mechanischem Spotting mittels Stift, Feder oder Kapillare, micro contact printing, fluidische Kontaktierung der Messbereiche mit den biologischen oder biochemischen oder synthetischen Erkennungselementen durch deren Zufuhr in parallelen oder gekreuzten Mikrokanälen, unter Einwirkung von Druckunterschieden oder elektrischen oder elektromagnetischen Potentialen gebildet werden.

21. Anordnung nach Anspruch 19, **dadurch gekennzeichnet, dass** als besagte biologische oder biochemische oder synthetische Erkennungselemente Komponenten aus der Gruppe aufgebracht werden, die von Nukleinsäuren wie z. B. DNA, RNA oder Nukleinsäure-Analogen wie z.B. PNA, Antikörpern, Aptameren, membrangebundenen und isolierten Rezeptoren, deren Liganden, Antigenen für Antikörper, durch chemische Synthese erzeugten Kavitäten zur Aufnahme molekularer Imprints, Histidin-Tag-Komponenten gebildet wird.

22. Anordnung nach Anspruch 19, **dadurch gekennzeichnet, dass** als biologische oder biochemische oder synthetische Erkennungselemente ganze Zellen oder Zellfragmente aufgebracht werden.

23. Anordnung nach einem der Ansprüche 1 - 22, **dadurch gekennzeichnet, dass** auf der Grundplatte (4) in den Bereichen der räumlichen Aussparungen (3) zwischen der Grundplatte (4) und dem damit zusammengebrachten Körper (6) Arrays von jeweils 2 oder mehr räumlich getrennten Messbereichen (d) angeordnet sind, in denen gleiche oder unterschiedliche biologische oder biochemische oder synthetische Erkennungselemente immobilisiert sind.

24. Anordnung nach einem der Ansprüche 19 - 23, daurch gekennzeichnet, dass zwischen den räumlich getrennten Messbereichen (d) gegenüber dem Analyten chemisch neutrale Verbindungen zur Verminderung unspezifischer Bindung oder Adsorption aufgebracht sind.

25. Anordnung nach Anspruch 24, **dadurch gekennzeichnet, dass** die besagten chemisch neutralen Verbindungen aus den Gruppen ausgewählt sind, die zum Beispiel von Albuminen, insbesondere Rinderserum- oder Humanserum-Albumin, Heringssperma oder auch Polyethylenglycolen gebildet werden.

26. Anordnung nach einem der Ansprüche 1 - 25, **dadurch gekennzeichnet, dass** die Grundplatte (4) mit den darauf immobilisierten biologischen oder biochemischen oder synthetischen Erkennungselementen ausgelegt ist zur Bestimmung der Änderung von optischen, elekrischen, elektrochemischen oder thermischen Nachweisgrößen oder zum Nachweis einer radioaktiven Strahlung.

27. Anordnung nach Anspruch 26, dadurch gekennzeichet, dass die Grundplatte (4) mit den darauf immobilisierten biologischen oder biochemischen oder synthetischen Erkennungselementen ausgelegt ist zur Bestimmung der Änderung von optischen Nachweisgrößen und mindestens in einem Wellenlängenbereich im sichtbaren oder nahen infraroten Spektrum transparent ist.

28. Anordnung nach einem der Ansprüche 1 - 27, **dadurch gekennzeichnet, dass** die Grundplatte (4) ein Trägersubstrat aus Glas oder einem thermoplastischen oder einem spritzbaren Kunststoff umfasst, welches mindestens in einem Wellenlängenbereich im sichtbaren oder nahen infraroten Spektrum transparent ist.

29. Anordnung nach einem der Ansprüche 1 - 28, **dadurch gekennzeichnet, dass** die Grundplatte (4) einen durchgehenden oder in einzelne Bereiche aufgeteilten optischen Wellenleiter umfasst.

30. Anordnung nach Anspruch 29, **dadurch gekennzeichnet, dass** der optische Wellenleiter ein optischer Schichtwellenleiter mit einer, den Aussparungen (3) zugewandten ersten optisch transparenten Schicht (a) auf einer zweiten optisch transparenten Schicht (b) mit niedrigerem Brechungsindex als Schicht (a) ist.

31. Anordnung nach Anspruch 30, **dadurch gekennzeichnet, dass** das Material der zweiten optisch transparenten Schicht (b) aus Silikaten, z. B. Glas oder Quarz, oder einem transparenten thermoplastischen oder spritzbaren Kunststoff, bevorzugt aus der Gruppe, die von Polycarbonat, Polyimid, Polymethylmethacrylat oder Polystyrol gebildet wird, besteht.

32. Anordnung nach einem der Ansprüche 30 - 31, **dadurch gekennzeichnet, dass** der Brechungsindex der ersten optisch transparenten Schicht (a) größer als 1.8 ist.

33. Anordnung nach einem der Ansprüche 30 - 32, **dadurch gekennzeichnet, dass** die erste optisch transparente Schicht (a) aus TiO₂, ZnO, Nb₂O₅, Ta₂O₅, HfO₂, oder ZrO₂, bevorzugt aus TiO₂, Ta₂O₅ oder Nb₂O₅ besteht.

34. Anordnung nach einem der Ansprüche 30 - 33, **dadurch gekennzeichnet, dass** die Dicke der ersten optisch transparenten Schicht (a) 40 bis 300 nm, bevorzugt 100 bis 200 nm beträgt.

35. Anordnung nach einem der Ansprüche 30 - 34, **dadurch gekennzeichnet, dass** sich zwischen den optisch transparenten Schichten (a) und (b) und in Kontakt mit Schicht (a) eine weitere optisch transparente Schicht (b') mit niedrigerem Brechungsindex als dem der Schicht (a) und einer Stärke von 5 nm - 10000 nm, vorzugsweise von 10 nm - 1000 nm, befindet.

36. Anordnung nach einem der Ansprüche 30 - 35, **dadurch gekennzeichnet, dass** die Einkopplung von Anregungslicht in die optisch transparente Schicht (a) zu den Messbereichen (d) über ein oder mehrere optische Einkoppelelemente aus der Gruppe erfolgt, die von Prismenkopplern, evaneszenten Kopplern mit zusammengebrachten optischen Wellenleitern mit überlappenden evaneszenten Feldern, Stirnflächenkopplern mit vor einer Strinseite der wellenleitenden Schicht angeordneten fokussierenden Linsen, vorzugsweise Zylinderlinsen, und Gitterkopplern gebildet wird.

37. Anordnung nach einem der Ansprüche 30 - 35, **dadurch gekennzeichnet, dass** die Einkopplung des Anregungslichts zu den Messbereichen (d) mithilfe von einer oder mehreren Gitterstrukturen (c) erfolgt, die in der optisch transparenten Schicht (a) ausgeprägt sind.

38. Anordnung nach einem der Ansprüche 30 - 37, **dadurch gekennzeichnet, dass** die Auskopplung von in der optisch transparenten Schicht (a) geführtem Licht mithilfe von Gitterstrukturen (c') erfolgt, die in der optisch transparenten Schicht (a) ausgeprägt sind.

39. Anordnung nach Anspruch 37 und Anspruch 38, **dadurch gekennzeichnet, dass** in der optisch transparenten Schicht (a) ausgeprägte Gitterstrukturen (c) und (c') gleiche oder unterschiedliche Periode haben und parallel oder nicht parallel zueinander ausgerichtet sind.

40. Anordnung nach Anspruch 39, **dadurch gekennzeichnet, dass** die Gitterstrukturen (c) und (c') wechselseitig als Ein- und / oder Auskoppelgitter verwendet werden können.

41. Anordnung nach einem der Ansprüche 37 - 40, **dadurch gekennzeichnet, dass** die Gitterstrukturen (c) und gegebenenfalls zusätzlich vorhandene Gitterstrukturen (c') eine Periode von 200 nm - 1000 nm aufweisen und die Modulationstiefe der Gitter 3 bis 100 nm, bevorzugt 10 bis 30 nm beträgt.

42. Anordnung nach Anspruch 41, **dadurch gekennzeichnet, dass** das Verhältnis von Modulationstiefe zur Dicke der ersten optisch transparenten Schicht (a) gleich oder kleiner als 0,2 ist.

43. Anordnung nach einem der Ansprüche 37 - 42, **dadurch gekennzeichnet, dass** die Gitterstruktur (c) ein Reliefgitter mit beliebigem Profil, beispielsweise mit Rechteck-, Dreieck- oder halbkreisförmigem Profil, oder ein Phasen- oder Volumengitter mit einer periodischen Modulation des Brechungsindexes in der im wesentlichen planaren optisch transparenten Schicht (a) ist.

44. Anordnung nach einem der Ansprüche 30 - 43, **dadurch gekennzeichnet, dass** zwischen der optisch transparenten Schicht (a) und den immobilisierten biologischen oder biochemischen oder synthetischen Erkennungselementen eine dünne Metallschicht, vorzugsweise aus Gold oder Silber, gegebenenfalls auf einer zusätzlichen dielektrischen Schicht mit niedrigerem Brechungsindex als der Schicht (a), beispielsweise aus Siliciumdioxid oder Magnesiumfluorid, aufgebracht ist, wobei die Dicke der Metallschicht und der eventuellen weiteren Zwischenschicht so ausgewählt ist, dass ein Oberflächenplasmon bei der Anregungswellenlänge und / oder der Lumineszenzwellenlänge angeregt werden kann.

45. Anordnung nach einem der Ansprüche 37 - 44, **dadurch gekennzeichnet, dass** die Gitterstruktur (c) ein diffraktives Gitter mit einer einheitlichen Periode ist.

46. Anordnung nach einem der Ansprüche 37 - 44, **dadurch gekennzeichnet, dass** die Gitterstruktur (c) ein multidiffraktives Gitter ist.

47. Anordnung nach einem der Ansprüche 37 - 46, **dadurch gekennzeichnet, dass** sich die Gitterstrukturen (c) und gegebenenfalls zusätzlich vorhandenen Gitterstukturen (c') innerhalb des Bereichs der Flusszellen befinden.

48. Anordnung nach einem der Ansprüche 37 - 46, **dadurch gekennzeichnet, dass** sich die Gitterstrukturen (c) und gegebenenfalls zusätzlich vorhandenen Gitterstukturen (c') außerhalb des Bereichs der Flusszellen befinden.

49. Anordnung nach einem der Ansprüche 37 - 46, **dadurch gekennzeichnet dass** sich Gitterstrukturen (c) und gegebenenfalls zusätzlich vorhandene Gitterstrukturen (c') über den Bereich mehrerer oder alle Flusszellen erstrecken.

50. Anordnung nach einem der Ansprüche 37 - 46, **dadurch gekennzeichnet, dass** sich die Gitterstrukturen (c) innerhalb des Bereichs der Flusszellen und zusätzlich vorhandene Gitterstrukturen (c') jeweils außerhalb der Flusszellen, in denen jeweils die Einkopplung des Anregungslichts erfolgt, befinden.

51. Anordnung nach einem der Ansprüche 1 - 50, **dadurch gekennzeichnet, dass** das Material des mit der Grundplatte (4) zusammengebrachten Körpers (6) an der Auflageoberfläche (g) zu der Grundplatte mindestens in der Eindringtiefe des evaneszenten Feldes sowohl für die Anregungsstrahlung als auch für eine oder mehrere gegebenenfalls angeregte Lumineszenzstrahlungen transparent ist.

52. Anordnung nach Anspruch 51, **dadurch gekennzeichnet, dass** das Material des mit der Grundplatte (4) zusammengebrachten Körpers (6) als zweilagige Schicht vorliegt, deren erste Schicht (g), welche mit der Oberfläche der Grundplatte in Kontakt gebracht wird, sowohl für die Anregungsstrahlung als auch für eine oder mehrere gegebenenfalls angeregte Lumineszenzstrahlungen transparent ist, während die dann anschließende, sich im weiteren Abstand von der Grundplatte (4) befindliche Schicht im Spektralbereich der Anregungsstrahlung und der gegebenenfalls angeregten Lumineszenzstrahlungen absorbierend ist.

53. Anordnung nach Anspruch 47 oder Anspruch 49, **dadurch gekennzeichnet, dass** das Material der mit der Grundplatte (4) in Kontakt stehenden Schicht (6) im Spektralbereich der Anregungsstrahlung und der gegebenenfalls angeregten Lumineszenzstrahlungen absorbierend ist.

54. Anordnung nach einem der Ansprüche 1 - 53, **dadurch gekennzeichnet, dass** das Material der mit der Grundplatte (4) in Kontakt stehenden Schicht (6) auf der Sensorplattform selbsthaftend und dicht verschließend ist.

55. Anordnung nach einem der Ansprüche 1 - 54, **dadurch gekennzeichnet, dass** das Material der mit der Grundplatte (4) in Kontakt stehenden Schicht (6) aus einem Polysiloxan besteht.

56. Anordnung nach einem der Ansprüche 1 - 55, **dadurch gekennzeichnet, dass** sich in einem Probenbehältnis 5 - 5000, bevorzugt 10 - 400 Messbereiche befinden.

57. Anordnung nach einem der Ansprüche 1 - 56, **dadurch gekennzeichnet, dass** auf der Grundplatte (4) optisch oder mechanisch erkennbare Markierungen zur Erleichterung der Justierung in einem optischen System und / oder zur Verbindung mit dem die Ausnehmungen für die Probenbehältnisse enthaltenden Körper (6) aufgebracht sind.

58. Analytisches System zur Bestimmung eines oder mehrerer Analyten, mit
- einer Anordnung nach einem der Ansprüche 1 - 57
- Vorkehrungen zur lokal adressierten Zuleitung von Proben oder Reagentien zu den Probenbehältnissen besagter Anordnung
- mindestens einem Detektor zur Erfassung einer Änderung einer Messgröße aufgrund der Anwesenheit des einen oder der mehreren Analyten, bei welcher Messgröße es sich vorzugsweise um eine optische, elektrische, elektrochemische oder thermische Nachweisgröße oder das Signal einer radioaktiven Strahlung handelt.

59. Analytisches System zur Bestimmung einer oder mehrerer Lumineszenzen, mit
- einer Anordnung nach einem der Ansprüche 1 - 57
- Vorkehrungen zur lokal adressierten Zuleitung von Proben oder Reagentien zu den Probenbehältnissen besagter Anordnung
- mindestens einer Anregungslichtquelle
- mindestens einem Detektor zur Erfassung des von dem mindestens einem oder mehreren Messbereichen (d) auf der Sensorplattform ausgehenden Lichts.

60. Analytisches System zur Bestimmung eines oder mehrerer Analyten, mit
- einer Anordnung nach einem der Ansprüche 1 - 57
- Vorkehrungen zur lokal adressierten Zuleitung von Proben oder Reagentien zu den Probenbehältnissen besagter Anordnung
- mindestens einer Anregungslichtquelle
- mindestens einem Detektor zur Erfassung einer Änderung von optischen Nachweisgrößen, wobei es sich vorzugsweise um eine Änderung des Brechungsindexes und / oder einer oder mehrerer Lumineszenzen in der Umgebung des einen oder der mehreren Analyten handelt.

61. Analytisches System nach einem der Ansprüche 59 - 60, **dadurch gekennzeichnet, dass** die Einstrahlung des Anregungslichts zu den Messbereichen (d) in einer Auflichtoder Transmissionsanordnung erfolgt.

62. Analytisches System nach einem der Ansprüche 59 - 61, **dadurch gekennzeichnet, dass** die Einstrahlung des Anregungslichts zu den Messbereichen (d) und die Erfassung des Messlichts von den Messbereichen (d) auf gegenüberliegenden Seiten der Grundplatte (4) erfolgen.

63. Analytisches System nach einem der Ansprüche 59 - 61, **dadurch gekennzeichnet, dass** die Einstrahlung des Anregungslichts zu den Messbereichen (d) und die Erfassung des Messlichts von den Messbereichen (d) auf der gleichen Seite der Grundplatte (4) erfolgen.

64. Analytisches System nach einem der Ansprüche 59 - 63, **dadurch gekennzeichnet, dass** die Einstrahlung des Anregungslichts zu den Messbereichen (d) und die Erfassung des Messlichts von den Messbereichen (d) in einer konfokalen Anordnung erfolgen.

65. Analytisches System nach einem der Ansprüche 59 - 63 mit einer Anordnung nach einem der Ansprüche 30 - 57, **dadurch gekennzeichnet, dass** die Anregungslichtstrahlen einer Wellenlänge in einer gemeinsamen Ebene liegen, die durch den Resonanzwinkel für die Einkopplung des Anregungslichts besagter Anregungswellenlänge in die optisch transparente Schicht (a) mit einem optischen Koppelelement definiert ist.

66. Analytisches System nach einem der Ansprüche 58 - 65, **dadurch gekennzeichnet, dass** zur Detektion mindestens ein ortsauflösender Detektor verwendet wird, welcher vorzugsweise ausgewählt ist aus der Gruppe, die von CCD-Kameras, CCD-Chips, Photodioden-Arrays, Avalanche-Dioden-Arrays, Multichannelplates und Vielkanal-Photomuliplier gebildet wird.

67. Analytisches System nach einem der Ansprüche 59 - 66, **dadurch gekennzeichnet, dass** zwischen der einen oder mehreren Anregungslichtquellen und der Grundplatte (4), als Bestandteil einer Anordnung gemäß einem der Ansprüche 1 - 57, und /oder zwischen besagter Grundplatte (4) und dem einen oder mehreren Detektoren optische Komponenten aus der Gruppe verwendet werden, die von Linsen oder Linsensystemen zur Formgestaltung der übertragenen Lichtbündel, planaren oder gekrümmten Spiegeln zur Umlenkung und gegebenenfalls zusätzlich zur Formgestaltung von Lichtbündeln, Prismen zur Umlenkung und gegebenenfalls zur spektralen Aufteilung von Lichtbündeln, dichroischen Spiegeln zur spektral selektiven Umlenkung von Teilen von Lichtbündeln, Neutralfiltern zur Regelung der übertragenen Lichtintensität, optischen Filtern oder Monochromatoren zur spektral selektiven Übertragung von Teilen von Lichtbündeln oder polarisationsselektiven Elementen zur Auswahl diskreter Polarisationsrichtungen des Anregungs- oder Lumineszenzlichts gebildet werden.

68. Analytisches System nach einem der Ansprüche 59 - 67, dadurch gekenzeichnet, dass die Einstrahlung des Anregungslichts in Pulsen mit einer Dauer zwischen 1 fsec und 10 Minuten erfolgt.

69. Analytisches System nach einem der Ansprüche 59 - 68, **dadurch gekennzeichnet, dass** das Emissionslicht aus den Messbereichen (d) zeitlich aufgelöst gemessen wird.

70. Analytisches System nach einem der Ansprüche 59 - 69, **dadurch gekennzeichnet, dass** zur Referenzierung des verfügbaren Anregungslichts Lichtsignale aus der Gruppe gemessen werden, die von Anregungslicht am Ort der Lichtquellen oder nach ihrer Aufweitung oder nach ihrer Unterteilung in Teilstrahlen, Streulicht bei der Anregungswellenlänge aus dem Bereich der einen oder mehreren räumlich getrennten Messbereiche, und über die Gitterstrukturen (c) oder (c') ausgekoppeltem Licht der Anregungswellenlänge gebildet werden.

71. Analytisches System nach Anspruch 70, **dadurch gekennzeichnet, dass** die Messbereiche (d) zur Bestimmung des Emissionslichts und des Referenzsignals identisch sind.

72. Analytisches System nach einem der Ansprüche 59 - 71, dadurch gekenzeichnet, dass die Einstrahlung des Anregungslichts auf und Detektion des Emissionslichts von einem oder mehreren Messbereichen (d) sequentiell für einzelne oder mehrere Flusszellen erfolgt.

73. Analytisches System nach Anspruch 72, **dadurch gekennzeichnet, dass** sequentielle Anregung und Detektion unter Verwendung beweglicher optischer Komponenten erfolgt, die aus der Gruppe von Spiegeln, Umlenkprismen und dichroischen Spiegeln gebildet wird.

74. Analytisches System nach Anspruch 73, **dadurch gekennzeichnet, dass** sequentielle Anregung und Detektion unter Verwendung eines im wesentlichen winkel- und fokusgetreuen Scanners erfolgt.

75. Analytisches System nach einem der Ansprüche 72 - 74, **dadurch gekennzeichnet, dass** die Anordnung nach einem der Ansprüche 1 - 57 zwischen Schritten der sequentiellen Anregung und Detektion bewegt wird.

76. Verfahren zur Herstellung einer Anordnung von Probenbehältnissen in einem einoder zweidimensionalen Array, gemäß einem der Ansprüche 1 - 57, umfassend eine Grundplatte (4) und einen damit derart zusammengebrachten Körper (6), dass zwischen der Grundplatte (4) und besagtem Körper (6) ein Array von räumlichen Aussparungen (3) zur Erzeugung eines Arrays von Flusszellen mit jeweils mindestens einem Zulauf (1) und mindestens einem Ablauf (2) erzeugt wird, wobei mindestens ein Ablauf (2) jeder Flusszelle in ein mit dieser Flusszelle fluidisch verbundenes Reservoir (5) führt, welches aus der Flusszelle austretende Flüssigkeit aufnehmen kann, und besagtes Reservoir (5) in der Außenwand des mit der Grundplatte (4) zusammengebrachten Körpers (6) ausgebildet und über oder oberhalb besagter Aussparungen (3) angeordnet ist, wobei besagte Grundplatte (4) und besagter Körper (6) derart zusammengefügt werden, dass verschiedene besagter räumlicher Aussparungen (3) gegeneinander fluidisch abgedichtet sind.

77. Verfahren nach Anspruch 76, **dadurch gekennzeichnet, dass** die Grundplatte (4) und der damit zusammengebrachte Körper (6) irreversibel zusammengefügt werden.

78. Verfahren nach Anspruch 77, **dadurch gekennzeichnet, dass** die Grundplatte (4) und der damit zusammengebrachte Körper (6) miteinander verklebt werden.

79. Verfahren nach Anspruch 76, **dadurch gekennzeichnet, dass** die Grundplatte (4) und der damit zusammengebrachte Körper (6) reversibel zusammengefügt werden.

80. Verfahren zum Nachweis eines oder mehrerer Analyten in einer oder mehreren flüssigen Probe mit einem analytischen System nach einem der Ansprüche 58 - 75, wobei den Probenbehältnissen Proben- und gegebenenfalls weitere Reagensflüssigkeiten zugeführt werden und diese in ein mit einer Flusszelle fluidisch verbundenes Reservoir (5), als Bestandteil besagter Probenbehältnisse, austreten können.

81. Verfahren nach Anspruch 80, wobei auf der Grundplatte (4) besagter Anordnung biologische oder biochemische oder synthetische Erkennungselemente zum Nachweis eines oder mehrerer Analyten immobilisiert sind, Anregungslicht zu den Messbereichen (d) auf besagter Grundplatte (4) geleitet wird und das von besagten Messbereichen (d) ausgehende Licht mit mindestens einem Detektor erfasst wird.

82. Verfahren nach Anspruch 81, **dadurch gekennzeichnet, dass** die Grundplatte (4) einen durchgehenden oder in einzelne Bereiche aufgeteilten optischen Wellenleiter umfasst, Anregungslicht über ein optisches Koppelelement in besagten optischen Wellenleiter geleitet wird und mit einem oder mehreren Detektoren Messlicht von den Messbereichen (d) erfasst wird, welche in optischer Wechselwirkung mit besagtem optischem Wellenleiter stehen.

83. Verfahren nach Anspruch 82, **dadurch gekennzeichnet, dass** besagter optischer Wellenleiter als optischer Schichtwellenleiter ausgebildet ist mit einer ersten optisch transparenten Schicht (a) auf einer zweiten optisch transparenten Schicht (b) mit niedrigerem Brechungsindex als Schicht (a), dass weiterhin Anregungslicht mithilfe einer oder mehrerer Gitterstrukturen, welche in der optisch transparenten Schicht (a) ausgeprägt sind, in die optisch transparente Schicht (a) eingekoppelt und zu darauf befindlichen Messbereichen (d) als geführte Welle geleitet wird, und dass weiterhin die im evaneszenten Feld besagter geführter Welle erzeugte Lumineszenz von lumineszenzfähigen Molekülen mit einem oder mehreren Detektoren erfasst und die Konzentration eines oder mehrerer Analyten aus der Intensität dieser Lumineszenzsignale bestimmt wird.

84. Verfahren nach Anspruch 83 mit einer Anordnung nach einem der Ansprüche 37 - 57, **dadurch gekennzeichnet, dass** (erstens) die isotrop abgestrahlte Lumineszenz oder (zweitens) in die optisch transparente Schicht (a) eingekoppelte und über die Gitterstruktur (c) ausgekoppelte Lumineszenz oder Lumineszenzen beider Anteile (erstens und zweitens) gleichzeitig gemessen werden.

85. Verfahren nach einem der Ansprüche 83 - 84, **dadurch gekennzeichnet, dass** zur Erzeugung der Lumineszenz ein Lumineszenzfarbstoff oder lumineszentes Nanopartikel als Lumineszenzlabel verwendet wird, das bei einer Wellenlänge zwischen 300 nm und 1100 nm angeregt werden kann und emittiert.

86. Verfahren nach Anspruch 85, **dadurch gekennzeichnet, dass** das Lumineszenzlabel an den Analyten oder in einem kompetitiven Assay an einen Analogen des Analyten oder in einem mehrstufigen Assay an einen der Bindungspartner der immobilisierten biologischen oder biochemischen oder synthetischen Erkennungselemente oder an die biologischen oder biochemischen oder synthetischen Erkennungselemente gebunden ist.

87. Verfahren nach einem der Ansprüche 85 - 86, **dadurch gekennzeichnet, dass** ein zweites oder noch weitere Lumineszenzlabel mit gleicher oder unterschiedlicher Anregungswellenlänge wie das erste Lumineszenzlabel und gleicher oder unterschiedlicher Emissionswellenlänge verwendet werden.

88. Verfahren nach Anspruch 87, **dadurch gekennzeichnet, dass** das zweite oder noch weitere Lumineszenzlabel bei der gleichen Wellenlänge wie der erste Lumineszenzfarbstoff angeregt werden kann, aber bei anderen Wellenlängen emittieren.

89. Verfahren nach Anspruch 87, **dadurch gekennzeichnet, dass** die Anregungsspektren und Emissionsspektren der eingesetzten Lumineszenzfarbstoffe nur wenig oder gar nicht überlappen.

90. Verfahren nach Anspruch 87, **dadurch gekennzeichnet, dass** zum Nachweis des Analyten Ladungs- oder optischer Energietransfer von einem als Donor dienenden ersten Lumineszenzfarbstoff zu einem als Akzeptor dienenden zweiten Lumineszenzfarbstoff verwendet wird.

91. Verfahren nach einem der Ansprüche 83 - 90, **dadurch gekennzeichnet, dass** neben der Bestimmung einer oder mehrerer Lumineszenzen Änderungen des effektiven Brechungsindexes auf den Messbereichen (d) bestimmt werden.

92. Verfahren nach einem der Ansprüche 83 - 91, **dadurch gekennzeichnet, dass** die einen oder mehreren Lumineszenzen und / oder Bestimmungen von Lichtsignalen bei der Anregungswellenlänge polarisationsselektiv vorgenommen werden.

93. Verfahren nach einem der Ansprüche 83 - 92, **dadurch gekennzeichnet, dass** die einen oder mehreren Lumineszenzen bei einer anderen Polarisation als der des Anregungslichts gemessen werden.

94. Verfahren nach einem der Ansprüche 83 - 93 zur gleichzeitigen oder sequentiellen, quantitativen oder qualitativen Bestimmung eines oder mehrerer Analyten aus der Gruppe von Antikörpern oder Antigenen, Rezeptoren oder Liganden, Chelatoren oder Histidin-tag-Komponenten, Oligonukleotiden, DNA- oder RNA-Strängen, DNA- oder RNA-Analoga, Enzymen, Enzymcofaktoren oder Inhibitoren, Lektinen und Kohlehydraten.

95. Verfahren nach einem der Ansprüche 83 - 94, **dadurch gekennzeichnet, dass** die zu untersuchenden Proben natürlich vorkommende Körperflüssigkeiten wie Blut, Serum, Plasma, Lymphe oder Urin oder Gewebeflüssigkeiten oder Eigelb sind.

96. Verfahren nach einem der Ansprüche 83 - 94, **dadurch gekennzeichnet, dass** die zu untersuchende Probe eine optisch trübe Flüssigkeit, Oberflächenwasser, ein Boden- oder Pflanzenextrakt, eine Bio- oder Syntheseprozessbrühe ist.

97. Verfahren nach einem der Ansprüche 83 - 96, **dadurch gekennzeichnet, dass** die zu untersuchenden Proben aus biologischen Gewebeteilen entnommen sind.

98. Verwendung einer Anordnung nach einem der Ansprüche 1 - 57 zu quantitativen oder qualitativen Analysen zur Bestimmung chemischer, biochemischer oder biologischer Analyten in Screeningverfahren in der Pharmaforschung, der Kombinatorischen Chemie, der Klinischen und Präklinischen Entwicklung, zu Echtzeitbindungsstudien und zur Bestimmung kinetischer Parameter im Affinitätsscreening und in der Forschung, zu qualitativen und quantitativen Analytbestimmungen, insbesondere für die DNA- und RNA-Analytik und die Bestimmung von genomischen oder proteomischen Unterschieden im Genom, wie beispielsweise Einzelnukleotid-Polymorphismen, zur Messung von Protein-DNAwechselwirkungen, zur Bestimmung von Steuerungsmechanismen für die m-RNA-Expression und für die Protein(bio)synthese, für die Erstellung von Toxizitätsstudien sowie für die Bestimmung von Expressionsprofilen, insbesondere zur Bestimmung von biologischen und chemischen Markerstoffen, wie mRNA, Proteinen, Peptiden oder niedermolekularen organischen (Boten-)Stoffen, sowie zum Nachweis von Antikörpern, Antigenen, Pathogenen oder Bakterien in der pharmazeutischen Protduktforschung und - entwicklung, der Human- und Veterinärdiagnostik, der Agrochemischen Produktforschung und -entwicklung, der symptomatischen und präsymptomatischen Pflanzendiagnostik, zur Patientenstratifikation in der pharmazeutischen Produktentwicklung und für die therapeutische Medikamentenauswahl, zum Nachweis von Pathogenen, Schadstoffen und Erregern, insbesondere von Salmonellen, Prionen, Viren und Bakterien, insbesondere in der Lebensmittel- und Umweltanalytik.

## Claims

1. An arrangement of sample compartments in a one- or two-dimensional array, comprising a base plate (4) and a body (6) combined with said base plate in such a way that an array of recesses (3) for generation of an array of flow cells fluidically sealed against one another, each with at least one inlet (1) and one outlet (2), are formed between said base plate and said body, wherein at least one outlet (2) of each flow cell is joined with a reservoir (5) fluidically connected with said flow cell, the reservoir being being designed to receive liquid from the flow cell, and wherein said reservoir is formed as a recess in the exterior wall of the body combined with the base plate and located above or below said recesses (3).

2. An arrangement according to claim 1, wherein three-dimensional structures, with the pitch of the arrays of flow cells to be generated, are formed on the base plate (4).

3. An arrangement according to any of claims 1 - 2, wherein, for generation of the recesses (3) between the base plate (4) and the body (6) combined therewith, recesses (3) are formed in the base plate (4).

4. An arrangement according to any of claims 1 - 3, wherein, for generation of the recesses (3) between the base plate (4) and the body (6) combined therewith, recesses (3) are formed in said body.

5. An arrangement according to any of claims 1 - 4, wherein the body (6) combined with the base plate (4) is formed from several parts, wherein the combined parts of said body preferably form an irreversibly combined unit.

6. An arrangement according to any of claims 1 - 5, wherein the arrangement comprises 2 - 2000, preferably 2 - 400, most preferably 2 - 100 flow cells.

7. An arrangement according to any of claims 1 - 6, wherein the pitch of the inlets (1, 9) of the flow cells corresponds to the pitch of the wells of a standard microtiter plate.

8. An arrangement according to any of claims 1 - 7, with, for example, 2 to 8 sample compartments in a column or, for example, 2 to 12 sample compartments in a row, which themselves are combined with a carrier (8) with the dimensions of standard microtiter plates in such a way, that the pitch of the inlets (1,9) of the flow cells corresponds to the pitch of the wells of a standard microtiter plate.

9. An arrangement according to any of claims 1- 8, wherein said arrangement of sample compartments is closed with an additional cover, for example a film, a membrane or a cover plate.

10. An arrangement according to any of claims 1 - 9, wherein the inner volume of each flow cell is 0.1 µl - 1000 µl, preferably 1 µl - 20 µl.

11. An arrangement according to any of claims 1 - 10, wherein the capacity of the reservoir (5) fluidically connected to the flow cell is larger, preferably at least 5 times larger than the inner volume of the flow cell.

12. An arrangement according to any of claims 1 - 11, wherein the depth of the recesses (3) between the base plate (4) and the body (6) combined with said base plate is 1 - 1000 µm, preferably 20 - 200 µm.

13. An arrangement according to any of claims 1 - 12, wherein the base areas of the recesses (3) between the base plate (4) and the body (6) combined with said base plate are 0.1 mm² - 200 mm², preferably 1 mm² - 100 mm² each, wherein the size of the recesses (3) of an array can be uniform or diverse, and wherein the base areas can have any geometry, preferably rectangular or polygonal or also other geometry.

14. An arrangement according to any of claims 1 - 13, wherein the materials of the base plate (4), of the body (6) combined with said base plate and of an additional cover according to claim 9 are selected from the group of formable, moldable or millable plastics, metals, silicates, such as glass, quartz or ceramics.

15. An arrangement according to any of claims 1 -14, wherein biological or biochemical or synthetic recognition elements for the determination of one or more analytes are immobilized on the base plate (4).

16. An arrangement according to any of claims 1 - 15, wherein an adhesion-promoting layer (f) is deposited on the base plate (4) for immobilization of the biological or biochemical or synthetic recognition elements.

17. An arrangement according to claim 16, wherein the adhesion-promoting layer (f) has a thickness of less than 200 nm, preferably of less than 20 nm.

18. An arrangement according to any of claims 16 - 17, wherein the adhesion-promoting layer (f) comprises chemical compounds from the groups of silanes, epoxides, self-organized functionalized monolayers, functionalized polymers and polymer gels.

19. An arrangement according to any of claims 1 - 18, wherein biological or biochemical or synthetic recognition elements are immobilized in discrete measurement areas (d), which are formed by spatially selective deposition of said biological or biochemical or synthetic recognition elements on the base plate (4).

20. An arrangement according to claim 19, wherein the biological or biochemical or synthetic recognition elements are deposited on the base plate (4) by one or more methods from the group of methods comprising ink jet spotting, mechanical spotting by means of pin, pen or capillary, micro contact printing, fluidically contacting the measurement areas with the biological or biochemical or synthetic recognition elements upon their supply in parallel or crossed micro-channels, upon exposure to pressure differences or to electric or electromagnetic potentials.

21. An arrangement according to claim 19, wherein, as said biological or biochemical or synthetic recognition elements, components from the groups formed by nucleic acids, such as DNA, RNA or nucleic acid analogues, such as, for example, PNA, antibodies, aptamers, membrane-bound and isolated receptors, their ligands, antigens for antibodies, cavities generated by chemical synthesis to host molecular imprints, and histidine-tag components, are deposited.

22. An arrangement according to claim 19, wherein, as said biological or biochemical or synthetic recognition elements, whole cells or cell fragments are deposited.

23. An arrangement according to any of claims 1 - 22, wherein arrays of two or more discrete measurement areas (d) each are arranged in the regions of the recesses (3) between the base plate (4) and the body (6) combined with said base plate (4), and similar or different biological or biochemical or synthetic recognition elements are immobilised in these measurement areas.

24. An arrangement according to any of claims 19 - 23, wherein compounds which are chemically neutral towards the analyte are deposited between the discrete measurement areas (d) to reduce non-specific binding or adsorption.

25. An arrangement according to claim 24, wherein said chemically neutral compounds are selected from the groups comprising, for example, albumins, especially bovine and human serum albumin, herring sperm or also polyethylene glycols.

26. An arrangement according to any of claims 1 - 25, wherein the base plate (4) with the biological or biochemical or synthetic recognition elements immobilized thereon is operable for the determination of a change of optical, electrical, electrochemical or thermal properties, or for the determination of radioactive radiation.

27. An arrangement according to claim 26, wherein the base plate (4) with the biological or biochemical or synthetic recognition elements immobilised thereon is designed for determining a change in optical properties, and wherein said base plate is transparent in at least one region of wavelengths in the visible or near-infrared spectral region.

28. An arrangement according to any of claims 1 - 27, wherein the base plate (4) comprises a supporting substrate of glass or of a thermoplastic or moldable plastic, which is transparent in at least one region of wavelengths in the visible or near-infrared spectral region.

29. An arrangement according to any of claims 1 - 28, wherein the base plate (4) comprises an optical waveguide, which is continuous or partitioned into discrete areas.

30. An arrangement according to claim 29, wherein the optical waveguide is an optical film waveguide with a first optically transparent layer (a), facing the recesses (3), on a second optically transparent layer (b) with lower refractive index than layer (a).

31. An arrangement according to claim 30, wherein the material of the second optically transparent layer (b) comprises silicates, such as glass or quartz, or a transparent thermoplastic or moldable plastic, preferably of the group comprising polycarbonate, polyimide, polymethylmethacrylate, or polystyrene.

32. An arrangement according to any of claims 30 - 31, wherein the refractive index of the first optically transparent layer (a) is higher than 1.8.

33. An arrangement according to any of claims 30 - 32, wherein the first optically transparent layer (a) comprises TiO₂, ZnO, Nb₂O₅, Ta₂O₅, HfO₂, or ZrO₂, preferably TiO₂, Ta₂O₅ or Nb₂O₅.

34. An arrangement according to any of claims 30 - 33, wherein the thickness of the first optically transparent layer (a) is between 40 and 300 nm, preferably between 100 and 200 nm.

35. An arrangement according to any of claims 30 - 34, wherein an additional optically transparent layer (b') with lower refractive index than layer (a) and with a thickness of 5 nm - 10 000 nm, preferably of 10 nm - 1000 nm, is located between the optically transparent layers (a) and (b) and in contact with layer (a).

36. An arrangement according to any of claims 30 - 35, wherein the in-coupling of excitation light into the optically transparent layer (a), to the measurement areas (d), is performed using one or more optical in-coupling elements from the group comprising prism couplers, evanescent couplers comprising joined optical waveguides with overlapping evanescent fields, front face (distal end) couplers with focusing lenses, preferably cylindrical lenses, arranged in front of a front face (distal end) of the waveguiding layer, and grating couplers.

37. An arrangement according to any of claims 30 - 35, wherein the in-coupling of excitation light into the optically transparent layer (a), to the measurement areas (d), is performed using one or more grating structures (c), that are formed in the optically transparent layer (a).

38. An arrangement according to any of claims 30 - 37, wherein the out-coupling of light guided in the optically transparent layer (a) is performed using grating structures (c') that are formed in the optically transparent layer (a).

39. An arrangement according to claim 37 and claim 38, wherein grating structures (c) and (c') formed in the optically transparent layer (a) have the same or different periodicity and are arranged in parallel or not in parallel to one another.

40. An arrangement according to claim 39, wherein grating structures (c) and (c') can be interchangeably used as in-coupling and / or out-coupling gratings.

41. An arrangement according to any of claims 37 - 40, wherein the grating structures (c) and optional additional grating structures (c') have a period of 200 nm - 1000 nm and a grating modulation depth of 3 nm - 100 nm, preferably of 10 nm - 30 nm.

42. An arrangement according to claim 41, wherein the ratio of the modulation depth to the thickness of the first optically transparent layer (a) is equal to or smaller than 0.2.

43. An arrangement according to any of claims 37 - 42, wherein the grating structure (c) is a relief grating with any profile, such as a rectangular, triangular or semicircular profile, or a phase or volume grating with a periodic modulation of the refractive index in the essentially planar optically transparent layer (a).

44. An arrangement according to any of claims 30 - 43, wherein a thin metal layer, preferably of gold or silver, optionally on an additional dielectric layer of lower refractive index than layer (a), for example of silica or magnesium fluoride, is deposited between the optically transparent layer (a) and the immobilized biological or biochemical recognition elements, wherein the thickness of the metal layer and the optional, additional intermediate layer is selected in such a way that a surface plasmon at the excitation wavelength and / or at the luminescence wavelength can be excited.

45. An arrangement according to any of claims 37 - 44, wherein the grating structure (c) is a diffractive grating with a uniform period.

46. An arrangement according to any of claims 37 - 44, wherein the grating structure (c) is a multi-diffractive grating.

47. An arrangement according to any of claims 37 - 46, wherein grating structures (c) and optional additional grating structures (c') are located within the region of the flow cells.

48. An arrangement according to any of claims 37 - 46, wherein grating structures (c) and optional additional grating structures (c') are located outside the region of the flow cells.

49. An arrangement according to any of claims 37 - 46, wherein grating structures (c) and optional additional grating structures (c') extend over the range of multiple or all flow cells.

50. An arrangement according to any of claims 37 - 46, wherein grating structures (c) are located within the region of the flow cells, and additional grating structures (c') are located outside of the flow cells, within which the incoupling of the excitation light is performed.

51. An arrangement according to any of claims 1 - 50, wherein the material of the body (6) combined with the baseplate (4), in the contact surface area (g) on the base plate, is optically transparent, both for the excitation radiation and for one or more optionally excited luminescence radiations, at least within the penetration depth of the evanescent field.

52. An arrangement according to claim 51, wherein the material of the body (6) combined with the base plate (4) is provided in form of a two-layer system whose first layer (g), which, is brought into contact with the surface of the base plate, is transparent both for the excitation radiation and for one or more optionally excited luminescence radiations, whereas the adjacent layer, which is located further away from the base plate (4), is absorbent in the spectral range of the excitation radiation and of the optionally excited luminescence radiations.

53. An arrangement according to claim 47 or claim 49, wherein the material of the layer (6) in contact with the base plate (4) is absorbent in the spectral range of the excitation radiation and of the optionally excited luminescence radiations.

54. An arrangement according to any of claims 1 - 53, wherein the material of the layer (6) in contact with the base plate (4) is self-adhesive and tightly sealing.

55. An arrangement according to any of claims 1 - 54, wherein the material of the layer (6) in contact with the base plate (4) comprises a polysiloxane.

56. An arrangement according to any of claims 1 - 55, wherein 5 - 1000, preferably 10 - 400 measurement areas are located in one sample compartment.

57. An arrangement according to any of claims 1 - 56, wherein optically or mechanically recognizable marks are provided on the base plate (4), in order to facilitate adjustment in an optical system and / or to facilitate combination of the base plate (4) with the body (6) comprising the recesses for the sample compartments.

58. An analytical system for the determination of one or more analytes, comprising
- an arrangement according to any of claims 1 - 57
- precautions for the locally addressed supply of samples or reagents to the sample compartments of said arrangement
- at least one detector for the detection of a change of a parameter (measurand) due to the presence of the one or more analytes, this parameter (measurand) preferably being an optical, electrical, electrochemical or thermal parameter (measurand) or a signal from radioactive radiation.

59. An analytical system for the determination of one or more luminescences comprising
- an arrangement according to any of claims 1- 57
- precautions for the locally addressed supply of samples or reagents to the sample compartments of said arrangement
- at least one excitation light source
- at least one detector for the detection of the light emanating from the at least one or more measurement areas (d) on the sensor platform.

60. An analytical system for the determination of one or more analytes, comprising
- an arrangement according to any of claims 1 - 57
- precautions for the locally addressed supply of samples or reagents to the sample compartments of said arrangement
- at least one excitation light source
- at least one detector for the detection of a change in optical parameter (measurand), which is preferably a change in the refractive index and /or in one or more luminescences in the vicinity of the one or more analytes.

61. An analytical system according to any of claims 59 - 60, wherein the launching of the excitation light to the measurement areas (d) is performed in an epi-illumination or transillumination configuration.

62. An analytical system according to any of claims 59 - 61, wherein the launching of the excitation light to the measurement areas (d) and the detection of the measurement light from the measurement areas (d) is performed on opposite sides of the base plate (4).

63. An analytical system according to any of claims 59 - 61, wherein the launching of the excitation light to the measurement areas (d) and the detection of the measurement light from the measurement areas (d) is performed on the same side of the base plate (4).

64. An analytical system according to any of claims 59 - 63, wherein the launching of the excitation light to the measurement areas (d) and the detection of the measurement light from the measurement areas (d) is performed in a confocal arrangement.

65. An analytical system according to any of claims 59 - 63 with an arrangement according to any of claims 30 - 57, wherein the excitation light rays of one (common) wavelength are located in a common plane, which is defined by the resonance angle for in-coupling the excitation light of said excitation wavelength into the optically transparent layer (a) by an optical coupling element.

66. An analytical system according to any of claims 58 - 65, wherein at least one laterally resolving detector is used for signal detection, which is preferably selected from the group formed by CCD cameras, CCD chips, photodiode arrays, Avalanche diode arrays, multi-channel plates, and multi-channel photomultipliers.

67. An analytical system according to any of claims 59 - 66, wherein optical components of the group comprising lenses or lens systems for the shaping of the transmitted light bundles, planar or curved mirrors for the deviation and optionally additional shaping of the light bundles, prisms for the deviation and optionally spectral separation of the light bundles, dichroic mirrors for the spectrally selective deviation of parts of the light bundles, neutral density filters for the regulation of the transmitted light intensity, optical filters or monochromators for the spectrally selective transmission of parts of the light bundles, or polarization-selective elements for the selection of discrete polarization directions of the excitation or luminescence light are located between the one or more excitation light sources and the base plate (4) as part of an arrangement according to any of claims 1 - 57 and / or between said base plate and the one or more detectors.

68. An analytical system according to any of claims 59 - 67, wherein the excitation light is launched in pulses with duration of 1 fsec to 10 min.

69. An analytical system according to any of claims 59 - 68, wherein the emission light from the measurement areas (d) is measured in a time-resolved manner.

70. An analytical system according to any of claims 59 - 69, wherein, for referencing the available excitation light, light signals of the group comprising excitation light at the location of the light sources or after expansion of the excitation light or after its multiplexing into individual beams, scattered light at the excitation wavelength from the location of the one or more discrete measurement areas, and light of the excitation wavelength out-coupled by the grating structures (c) or (c') are measured.

71. An analytical system according to claim 70, wherein the measurement areas (d) for determination of the emission light and of the reference signal are identical.

72. An analytical system according to any of claims 59 - 71, wherein launching of the excitation light and detection of the emission light from one or more measurement areas (d) is performed sequentially for one or more flow cells.

73. An analytical system according to claim 72, wherein sequential excitation and detection is performed using movable optical components of the group comprising mirrors, deviating prisms, and dichroic mirrors.

74. An analytical system according to claim 73, wherein sequential excitation and detection is performed using an essentially focus- and angle-preserving scanner.

75. An analytical system according to any of claims 72 - 74, wherein the arrangement, according to any of claims 1 - 57, is moved between steps of sequential excitation and detection.

76. A method for manufacturing an arrangement of sample compartments in a one- or two-dimensional array, according to any of claims 1 - 57, comprising a base plate (4) and a body (6) combined with said base plate in such a way that an array of spatial recesses (3) for generation of an array of flow cells, each with at least one inlet (1) and one outlet (2), is formed between said base plate (4) and said body (6), wherein at least one outlet (2) of each flow cell is joined with a reservoir (5) fluidically connected with said flow cell, the reservoir being designed to receive liquid from the flow cell and being formed in the exterior wall of the body (6) combined with the baseplate (4) and located above or below said recesses (3), wherein said base plate (4) and said body (6) are combined in such a way that different said spatial recesses (3) are fluically sealed against one another.

77. A method according to claim 76, wherein the base plate (4) and the body (6) combined therewith are irreversibly joined.

78. A method according to claim 77, wherein the base plate (4) and the body (6) combined therewith are irreversibly joined.

79. A method according to claim 76, wherein the base plate (4) and the body (6) combined therewith are irreversibly joined.

80. A method for the determination of one or more analytes in one or more liquid samples with an analytical system according to any of claims 58 - 75, wherein sample and optionally additional reagent solutions are supplied to the sample compartments, and wherein these liquids can exit into a reservoir (5) fluidically connected with a flow cell, as part of said sample compartments.

81. A method according to claim 80, wherein biological or biochemical or synthetic recognition elements for the determination of one or more analytes are immobilized on the base plate (4) of said arrangement, excitation light is directed to the measurement areas on said base plate (4), and the light emanating from said measurement areas is detected by at least one detector.

82. A method according to claim 81, wherein the base plate (4) comprises an optical waveguide, which is continuous or partitioned into discrete areas, excitation light is launched into said waveguide using an optical coupling element, and measurement light from the measurement areas (d), which are in optical interaction with said optical waveguide, is detected by one or more detectors.

83. A method according to claim 82, wherein said optical waveguide is provided as an optical film waveguide, with an initial optically transparent layer (a) on a second optically transparent layer (b) with lower refractive index than layer (a), wherein furthermore excitation light is in-coupled into the optically transparent layer (a), by one or more grating structures formed in the optically transparent layer (a), and directed, as a guided wave, to the measurement areas (d) located thereon, and wherein furthermore the luminescence from molecules capable of luminescence, which is generated in the evanescent field of said guided wave, is detected by one or more detectors, and wherein the concentration of one or more analytes is determined from the intensity of these luminescence signals.

84. A method according to claim 83 with an arrangement according to any of claims 37 - 57, wherein (firstly) the isotropically emitted luminescence or (secondly) luminescence that is in-coupled into the optically transparent layer (a) and out-coupled by a grating structure (c) or luminescence comprising both parts (firstly and secondly) is measured simultaneously.

85. A method according to any of claims 83 - 84, wherein, for the generation of said luminescence, a luminescent dye or a luminescent nano-particle is used as a luminescence label, which can be excited and emits at a wavelength between 300 nm and 1100 nm.

86. A method according to claim 85, wherein the luminescence label is bound to the analyte or, in a competitive assay, to an analyte analogue or, in a multi-step assay, to one of the binding partners of the immobilized biological or biochemical or synthetic recognition elements or to the biological or biochemical or synthetic recognition elements.

87. A method according to any of claims 85 - 86, wherein a second or further luminescence labels with an excitation wavelength similar to or different from that of the first luminescence label and a similar or different emission wavelength are used.

88. A method according to claim 87, wherein the second or further luminescence labels can be excited at the same wavelength as the first luminescence label, but emit at other wavelengths.

89. A method according to claim 87, wherein the excitation and emission spectra of the applied luminescent dyes do not overlap or overlap only partially.

90. A method according to claim 87, wherein charge or optical energy transfer from a first luminescent dye acting as a donor to a second luminescent dye acting as an acceptor is used for the detection of the analyte.

91. A method according to any of claims 83 - 90, wherein, besides determination of one or more luminescences, changes in the effective refractive index on the measurement areas (d) are determined.

92. A method according to any of claims 83 - 91, wherein the one or more determinations of luminescences and / or determinations of light signals at the excitation wavelengths are performed in a polarization-selective manner.

93. A method according to any of claims 83 - 92, wherein the one or more luminescences are measured at a polarization that is different from that of the excitation light.

94. A method according to any of claims 83 - 93 for the simultaneous or sequential, quantitative or qualitative determination of one or more analytes of the group comprising antibodies or antigens, receptors or ligands, chelators or histidine-tag components, oligonucleotides, DNA or RNA strands, DNA or RNA analogues, enzymes, enzyme cofactors or inhibitors, lectins and carbohydrates.

95. A method according to any of claims 83 - 94, wherein the samples to be analysed are naturally occurring body fluids, such as blood, serum, plasma, lymph or urine, or tissue fluids, or egg yolk.

96. A method according to any of claims 83 - 94, wherein the samples to be analysed are optically turbid liquids, surface water, a soil or plant extract, a biological or synthetic process broth.

97. A method according to any of claims 83 - 96, wherein the samples to be analysed are taken from biological tissue.

98. The use of an arrangement according to any of claims -1 - 57 for quantitative or qualitative analyses for the determination of chemical, biochemical or biological analytes in screening methods in pharmaceutical research, combinatorial chemistry, clinical and preclinical development, for real-time binding studies and the determination of kinetic parameters in affinity screening and in research, for qualitative and quantitative analyte determinations, especially for DNA- and RNA analytics and for the determination of genomic or proteomic differences in the genome, such as single nucleotide polymorphisms, for the measurment of protein-DNA interactions, for the determination of control mechanisms for mRNA expression and for the protein (bio)synthesis, for the generation of toxicity studies and the determination of expression profiles, especially for the determination of biological and chemical marker compounds, such as mRNA, proteins, peptides or small-molecular organic (messenger) compounds, and for the determination of antibodies, antigens, pathogens or bacteria in pharmaceutical product research and development, human and veterinary diagnostics, agrochemical product research and development, for symptomatic and pre-symptomatic plant diagnostics, for patient stratification in pharmaceutical product development and for the therapeutic drug selection, for the determination of pathogens, noxious agents and pathogens, especially of salmonella, prions, virus and bacteria, especially in food and environmental analytics.

## Revendications

1. Un ensemble de compartiments disposés selon un réseau à une ou deux dimensions, comprenant une base (4) et un corps (6) associé à ladite base de sorte qu'un ensemble de cavités (3) formant un réseau de cellules jointes hermétiquement l'une à l'autre, chacune de ces cavités comportant au moins un port d'entrée (1) et un port de sortie (2), soit formé entre ladite base et ledit corps, de sorte que au moins un port de sortie (2) de chaque cellule soit connectée à un réservoir (5) connecté fluidiquement avec ladite cellule, le réservoir pouvant recevoir un liquide provenant de la cellule, et **caractérisé en ce que** ledit réservoir est formé d'une cavité dans la paroi extérieure du corps associé à la base et situé au dessus ou en dessous de ladite cavité (3).

2. Un dispositif selon la revendication 1, **caractérisé en ce que** des structures tridimensionelles, **caractérisées par** un pas de masque correspondant au réseau de cellules destinée à être formée, est formée sur la base (4).

3. Un dispositif selon l'une des revendications 1 à 2, **caractérisé en ce que**, pour former les cavités (3) entre la base (4) et le corps (6), des cavités (3) sont formées dans la base (4).

4. Un dispositif selon l'une des revendications 1 à 3, **caractérisé en ce que**, pour former les cavités (3) entre la base (4) et le corps (6), des cavités (3) sont formées dans ledit corps.

5. Un dispositif selon l'une des revendications 1 à 4, **caractérisé en ce que** le corps (6) associé à la base (4) est constitué de plusieurs parties et les parties associées dudit corps forment préférentiellement une unité irréversible.

6. Un dispositif selon l'une des revendications 1 à 5, **caractérisé en ce que** le dispositif comprend de 2 à 2000, préférentiellement de 2 à 400, plus préférentiellement de 2 à 100 cellules.

7. Un dispositif selon l'une des revendications 1 à 6, **caractérisé en ce que** le pas de masque des ports d'entrée (1, 9) des cellules correspond au pas de masque des puits d'une microplaque standard.

8. Un dispositif selon l'une des revendications 1 à 7, comprenant, par exemple, 2 à 8 compartiments sur une colonne ou, par exemple, 2 à 12 compartiments sur une ligne, eux-même associés à un support (8) aux dimensions standard d'une microplaque de sorte que le pas de masque des ports d'entrée (1, 9) des cellules corresponde au pas de masque des puits d'une microplaque standard.

9. Un dispositif selon l'une des revendications 1 à 8, **caractérisé en ce que** ledit ensemble de compartiments est fermé avec un élément supérieur supplémentaire, par exemple un film, une membrane ou un couvercle.

10. Un dispositif selon l'une des revendications 1 à 9, **caractérisé en ce que** le volume intérieur de chaque cellule est 0.1 µl - 1000 µl, préférentiellement 1 µl - 20 µl.

11. Un dispositif selon l'une des revendications 1 à 10, **caractérisé en ce que** la capacité du réservoir (5) connecté fluidiquement à la cellule est plus grande, préférentiellement au moins 5 fois plus grande, que le volume intérieur de la cellule.

12. Un dispositif selon l'une des revendications 1 à 11, **caractérisé en ce que** la profondeur des cavités (3) entre la base (4) et le corps (6) associé avec ladite base est 1 - 1000 µm, préférentiellement 20 - 200 µm.

13. Un dispositif selon l'une des revendications 1 à 12, **caractérisé en ce que** la surface basale des cavités (3) entre la base (4) et le corps (6) associé à ladite base est chacune 0.1 mm² - 200 mm², préférentiellement 1 mm² - 100 mm², quoique la taille des cavités (3) d'un réseau puisse être uniforme ou diverse, et la surface basale peut présenter une géométrie quelconque, préférentiellement rectangulaire ou polygonale ou encore une autre géométrie.

14. Un dispositif selon l'une des revendications 1 à 13, **caractérisé en ce que** les matériaux de la base (4), du corps (6) associé à ladite base et d'un élément supérieur supplémentaire conformément à la revendication 9 sont sélectionnés parmi le groupe des plastiques formables, moulables ou fraisables, des métaux, des silicas, tels que le verre, le quartz ou la céramique.

15. Un dispositif selon l'une des revendications 1 à 14, **caractérisé en ce que** des éléments de reconnaissance biochimiques ou biologiques ou synthétiques pour la détermination d'un ou de plusieurs analytes sont immobilisés sur la base (4).

16. Un dispositif selon l'une des revendications 1 à 15, **caractérisé en ce que** une couche promotrice d'adhésion (f) est déposée sur la base (4) en vue de l'immobilisation des éléments de reconnaissance biochimiques ou biologiques ou synthétiques.

17. Un dispositif selon la revendication 16, **caractérisé en ce que** la couche promotrice d'adhésion (f) a une épaisseur de moins de 200 nm, préférentiellement de moins de 20 nm.

18. Un dispositif selon l'une des revendications 16 à 17, **caractérisé en ce que** la couche promotrice d'adhésion (f) comprend des composés chimiques du groupe des silanes, epoxydes, monocouches fonctionalisées auto-assemblées, polymères fonctionalisés et gels polymériques.

19. Un dispositif selon l'une des revendications 1 à 18, **caractérisé en ce que** les éléments de reconnaissance biochimiques ou biologiques ou synthétiques sont immobilisés en des zones de mesures discrètes (d), qui sont formées par la déposition sélective spatiale desdits éléments de reconnaissance biochimiques ou biologiques ou synthétiques sur la base (4).

20. Un dispositif selon la revendication 19, **caractérisé en ce que** les éléments de reconnaissance biochimiques ou biologiques ou synthétiques sont déposés sur la base (4) par une ou plusieurs méthodes du groupe de méthodes comprenant l'impression par jet d'encre, l'impression mécanique au moyen d'aiguille, stylet ou capillaire, l'impression par microcontact, la mise en contact fluide de la zone de mesure avec les éléments de reconnaissance biochimiques ou biologiques ou synthétiques par leur apport dans des microcanaux parallèles ou croisés, par leur exposition à des différences de pression ou à des champs électriques ou électromagnétiques.

21. Un dispositif selon la revendication 19, **caractérisé en ce que**, en tant que lesdits éléments de reconnaissance biochimiques ou biologiques ou synthétiques, des éléments des groupes formés par les acides nucléiques, tels que ADN, ARN ou analogues d'acides nucléiques, tels que, par exemple, APN, anticorps, aptamères, récepteurs membranaires attachés à leur membrane ou isolés, leurs ligands, antigènes pour anticorps, cavités produites par synthèse chimique pour recevoir des empreintes moléculaires, et composés histidin-tag, sont déposés.

22. Un dispositif selon la revendication 19, **caractérisé en ce que**, en tant que lesdits éléments de reconnaissance biochimiques ou biologiques ou synthétiques, des cellules entières ou des fragments de cellule, sont déposés.

23. Un dispositif selon l'une des revendications 1 à 22, **caractérisé en ce que** des réseaux de deux ou plus zones de mesures discrètes (d) chacune sont arrangées dans les régions des cavités (3) entre la base (4) et le corps (6) associé à ladite base, dans lesquelles zones de mesure des éléments de reconnaissance biochimiques ou biologiques ou synthétiques similaires ou différents sont immobilisés.

24. Un dispositif selon l'une des revendications 19 à 22, **caractérisé en ce que** des composés qui sont chimiquement neutres envers l'analyte sont déposés entre les zones de mesure discrètes (d) pour diminuer de la liaison ou adsorption inspécifique.

25. Un dispositif selon la revendication 24, **caractérisé en ce que** lesdits composés chimiquement neutres sont sélectionnés à l'intérieur des groupes comprenant, par exemple, des albumines, en particulier l'albumine de sérum bovine et humaine, le sperme de hareng ou encore des glycols de polyéthylène.

26. Un dispositif selon l'une des,revendications 1 à 25, **caractérisé en ce que** la base (4) avec les éléments de reconnaissance biochimiques ou biologiques ou synthétiques immobilisés dessus, est opérationelle pour la détermination d'un changement de propriétés optiques, électriques, électrochimiques ou thermiques, ou pour la détermination de radiations radioactives.

27. Un dispositif selon la revendication 26, **caractérisé en ce que** la base (4) avec les éléments de reconnaissance biochimiques ou biologiques ou synthétiques immobilisés dessus, est opérationelle pour la détermination d'un changement de propriétés optiques, et ladite base est transparente pour au moins une gamme de longueurs d'onde de la gamme spectrale visible ou proche-infrarouge.

28. Un dispositif selon l'une des revendications 1 à 27, **caractérisé en ce que** la base (4) comprend un substrat de verre ou de matière plastique thermoplastique ou moulable, qui est transparent dans au moins une gamme de longueurs d'onde de la gamme spectrale visible ou proche-infrarouge.

29. Un dispositif selon l'une des revendications 1 à 28, **caractérisé en ce que** la base (4) comprend un guide d'ondes optique, qui est continu ou fractionné en zones discrètes.

30. Un dispositif selon la revendication 29, **caractérisé en ce que** le guide d'ondes optique est un guide d'ondes sous forme de film avec une première couche optiquement transparente (a), faisant face aux cavités (3), sur une seconde couche optiquement transparente (b) avec un indice de réfraction plus faible que celui de la couche (a).

31. Un dispositif selon la revendication 30, **caractérisé en ce que** le matériau de la seconde couche optiquement transparente (b) comprend des silicates, tel que du verre ou du quartz, ou une matière plastique transparente thermoplastique ou moulable, préférentiellement du groupe comprenant le polycarbonate, polyimide, polyméthylméthacrylate, ou polystyrène.

32. Un dispositif selon l'une des revendications 30 à 31, **caractérisé en ce que** l'indice de réfraction de la première couche optiquement transparente (a) est supérieur à 1.8.

33. Un dispositif selon l'une des revendications 30 à 32, **caractérisé en ce que** la première couche optiquement transparente (a) comprend TiO₂, ZnO, Nb₂O₅, Ta₂O₅, HfO₂, or ZrO₂, préférentiellement TiO₂, Ta₂O₅ or Nb₂O₅.

34. Un dispositif selon l'une des revendications 30 à 33, **caractérisé en ce que** l'épaisseur de la première couche optiquement transparente (a) se situe entre 40 nm et 300 nm, préférentiellement entre 100 nm and 200 nm.

35. Un dispositif selon l'une des revendications 30 à 34, **caractérisé en ce qu'**une couche optiquement transparente supplémentaire (b') avec un indice de réfraction plus faible que celui de la couche (a), et avec une épaisseur de 5 nm à 10 000 nm, préférentiellement de 10 nm à 1000 nm, est située entre les couches optiquement transparentes (a) et (b) et est en contact avec la couche (a).

36. Un dispositif selon l'une des revendications 30 à 35, **caractérisé en ce que** le couplage de lumière d'excitation dans la couche transparente (a), jusqu'aux zones de mesure (d), est effectué grâce à un ou plusieurs éléments de couplage optique du groupe comprenant les prismes de couplage, les coupleurs évanescents comprenant des guides d'ondes optiques joints avec champs évanescents imbriqués, les coupleurs de face avec lentilles de mise au point, préférentiellement des lentilles cylindriques, disposées face à une extrémité de la couche guide d'onde, et des coupleurs à réseau.

37. Un dispositif selon l'une des revendications 30 à 35, **caractérisé en ce que** le couplage de lumière d'excitation dans la couche transparente (a), jusqu'aux zones de mesure (d), est effectué grâce à une ou plusieurs structures de réseau de diffraction (c), qui sont formées dans la couche optiquement transparente (a).

38. Un dispositif selon l'une des revendications 30 à 37, **caractérisé en ce que** le couplage de lumière guidée dans la couche optiquement transparente (a) hors de la couche optiquement transparente (a) est effectuée grâce à des structures de réseau de diffraction (c') qui sont formées dans la couche optiquement transparente (a).

39. Un dispositif selon la revendication 37 et la revendication 38, **caractérisé en ce que** les structures de réseau de diffraction (c) et (c') formées dans la couche optiquement transparente (a) ont la même périodicité ou des périodicités différentes et sont diposées parallèlement ou non parallèlement l'une à l'autre.

40. Un dispositif selon la revendication 39, **caractérisé en ce que** les structures de réseau de diffraction (c) et (c') peuvent être utilisées de facon interchangeable comme réseau de diffraction de couplage en entrée ou en sortie.

41. Un dispositif selon l'une des revendications 37 à 40, **caractérisé en ce que** les structures de réseau de diffraction (c) et les structures de réseau de diffraction supplémentaires optionelles (c') ont une période de 200 nm à 1000 nm et une profondeur de modulation de réseau de 3 nm à 100 nm, préférentiellement de 10 nm à 30 nm.

42. Un dispositif selon la revendication 41, **caractérisé en ce que** le rapport de la profondeur de modulation à l'épaisseur de la première couche optiquement transparente est inférieure ou égale à 0.2.

43. Un dispositif selon l'une des revendications 37 à 42, **caractérisé en ce que** la structure de réseau de diffraction (c) est un réseau en relief avec un profile quelconque, tel qu'un profile rectangulaire, triangulaire ou semi-circulaire, ou un réseau de phase ou de volume avec une période de modulation de l'indice de refraction dans la couche optiquement transparente (a) essentiellement plane.

44. Un dispositif selon l'une des revendications 30 à 43, **caractérisé en ce qu'**une couche mince métallique, préférentiellement d'or ou d'argent, optionellement sur une couche diélectrique supplémentaire d'indice de réfraction inférieur à celui de la couche (a), par exemple de silice ou de fluorure de magnésium, et déposée entre la couche optiquement transparente (a) et les éléments de reconnaissance biologiques ou biochimiques ou synthétiques immobilisés, **caractérisée en ce que** l'épaisseur de la couche métallique et de la couche intermédiaire supplémentaire optionelle est sélectionnée de telle facon qu'un plasmon de surface peut être généré à la longueur d'onde d'excitation et / ou à la longueur d'onde de luminescence.

45. Un dispositif selon l'une des revendications 37 à 44, caractérisé en ce la structure de réseau de diffraction (c) est un réseau de diffraction de période uniforme.

46. Un dispositif selon l'une des revendications 37 à 44, caractérisé en ce la structure de réseau de diffraction (c) est un réseau de diffraction multiple.

47. Un dispositif selon l'une des revendications 37 à 46, caractérisé en ce les structures de réseau de diffraction (c) et les structures de réseau de diffraction supplémentaires optionelles (c') sont situées à l'intérieur de la zone des cellules.

48. Un dispositif selon l'une des revendications 37 à 46, caractérisé en ce les structures de réseau de diffraction (c) et les structures de réseau de diffraction supplémentaires optionelles (c') sont situées à l'extérieur de la zone des cellules.

49. Un dispositif selon l'une des revendications 37 à 46, **caractérisé en ce que** les structures de réseau de diffraction (c) et les structures de réseau de diffraction supplémentaires optionelles (c') s'étendent au-delà de la zone de plusieurs cellules ou de toutes les cellules.

50. Un dispositif selon l'une des revendications 37 à 46, **caractérisé en ce que** les structures de réseau de diffraction (c) sont situées à l'intérieur de la zone des cellules et les structures de réseau de diffraction supplémentaires optionelles (c') sont situées à l'extérieur de la zone des cellules à l'intérieur desquelles s'effectue le couplage en entrée de la lumière d'excitation.

51. Un dispositif selon l'une des revendications 1 à 50, **caractérisé en ce que** le matériau du corps (6) associé à la base (4), dans la surface (g) de la base, est optiquement transparent, à la fois pour la radiation d'excitation et pour une ou plusieurs radiations de luminescence éventuellement excitées, au moins sur la profondeur de pénétration du champ évanescent.

52. Un dispositif selon la revendication 51, **caractérisé en ce que** le matériau du corps (6) associé à la base (4) est suppléé sous la forme d'un système bicouche, la première couche (g), destinée à être mise en contact avec la surface de la base, étant transparente à la fois pour la radiation d'excitation et pour une ou plusieurs radiations de luminescence éventuellement excitées, alors que la couche adjacente, étant située plus à distance de la base (4), est absorbante dans la gamme spectrale de la radiation d'excitation et des radiations de luminescence éventuellement excitées.

53. Un dispositif selon la revendication 47 ou la revendication 49, **caractérisé en ce que** le matériau de la couche (6) en contact avec la base (4) est absorbant dans la gamme spectrale de la radiation d'excitation et des radiations de luminescence éventuellement excitées.

54. Un dispositif selon l'une des revendications 1 à 53, **caractérisé en ce que** le matériau de la couche (6) en contact avec la base (4) est autocollant et forme un joint étanche.

55. Un dispositif selon l'une des revendications 1 à 54, **caractérisé en ce que** le matériau de la couche (6) en contact avec la base (4) se compose d'un polysiloxane.

56. Un dispositif selon l'une des revendications 1 à 55, **caractérisé en ce que** de 5 à 1000, préférentiellement de 10 à 400 zones de mesure sont situées dans un compartiment.

57. Un dispositif selon l'une des revendications 1 à 56, **caractérisé en ce que** des marquages reconnaissables mécaniquement ou optiquement sont suppléés sur la base (4), de facon à faciliter l'ajustement dans un système optique et/ou à faciliter la combinaison de la base (4) avec le corps (6) comprenant les cavités pour les compartiments.

58. Un système analytique pour la détermination d'un ou de plusieurs analytes, comprenant:
- un dispositif selon l'une des revendications 1 à 57
- des moyens de suppléer localement des échantillons ou réactifs dans le compartiment dudit dispositif
- au moins un détecteur pour la détection d'un changement d'une propriété causé par la présence d'un ou de plusieurs analytes, laquelle propriété est préférentiellement une propriété optique, électrique, électrochimique ou thermique ou un signal de radiation radioactive.

59. Un système analytique pour la détermination d'une ou de plusieurs luminescences, comprenant:
- un dispositif selon l'une des revendications 1 à 57
- des moyens de suppléer localement des échantillons ou réactifs dans le compartiment dudit dispositif
- au moins une source d'excitation lumineuse
- au moins un détecteur pour la détection de la lumière provenant de au moins une ou plusieurs des zones de mesure (d) de la plate-forme de capteur.

60. Un système analytique pour la détermination d'un ou de plusieurs analytes, comprenant:
- un dispositif selon l'une des revendications 1 à 57
- des moyens de suppléer localement des échantillons ou réactifs dans le compartiment dudit dispositif
- au moins une source d'excitation lumineuse
- au moins un détecteur pour la détection d'un changement d'une propriété optique, qui est préférentiellement un changement de l'indice de réfraction et / ou d'une ou plusieurs luminescences à proximité de l'analyte ou des analytes.

61. Un système analytique selon l'une des revendications 59 à 60, **caractérisé en ce que** l'envoi de la lumière d'excitation vers les zones de mesure (d) est effectuée selon une configuration d'illumination surfacique ou transmissive.

62. Un système analytique selon l'une des revendications 59 à 61, **caractérisé en ce que** l'envoi de la lumière d'excitation vers les zones de mesure (d) et la détection de la lumière de mesure depuis les zones de mesure (d) sont effectuées sur des faces opposées de la base (4).

63. Un système analytique selon l'une des revendications 59 à 61, **caractérisé en ce que** l'envoi de la lumière d'excitation vers les zones de mesure (d) et la détection de la lumière de mesure depuis les zones de mesure (d) sont effectuées sur la même face de la base (4).

64. Un système analytique selon l'une des revendications 59 à 63, **caractérisé en ce que** l'envoi de la lumière d'excitation vers les zones de mesure (d) et la détection de la lumière de mesure depuis les zones de mesure (d) sont effectuées selon une configuration confocale.

65. Un système analytique selon l'une des revendications 59 à 63 avec un dispositif selon l'une des revendications 30 à 57, **caractérisé en ce que** les rayons de la lumière d'excitation d'une longueur d'onde commune sont situés dans un plan commun, qui est défini par l'angle de résonance de couplage de la lumière d'excitation de ladite longueur d'onde d'excitation dans la couche optiquement transparente (a) par un élément de couplage optique.

66. Un système analytique selon l'une des revendications 58 à 65, **caractérisé en ce que** au moins un détecteur à résolution latérale est utilisé pour la détection du signal, qui est préférablement sélectionné à partir du groupe formé par les caméras CCD, les puces CCD, les réseaux de photodiodes, les réseaux de diodes en avalanche, les plaques multicanaux, et les photomultiplicateurs multicanaux.

67. Un système analytique selon l'une des revendications 59 à 66, **caractérisé en ce que** des composants optiques du groupe comprenant les lentilles ou systèmes de lentilles pour la mise en forme des faisceaux lumineux transmis, des mirroirs plans ou courbes pour la déviation et éventuellement la mise en forme supplémentaire des faisceaux lumineux transmis, des prismes pour la déviation et éventuellement la séparation optique des faisceaux lumineux transmis, des mirroirs dichroïques pour la déviation, sélective selon la longueur d'onde, d'une partie des faisceaux lumineux, des filtres de densité neutre pour la régulation de l'intensité de la lumière transmise, des filtres optiques ou des monochromateurs pour la transmission spectralement sélective de parties des faisceaux lumineux, ou d'éléments sélectivement polarisants pour la sélection de directions discrètes de polarisation de la lumière d'excitation ou de luminescence, sont situés entre la ou les sources d'excitation lumineuse et la base (4), en tant que partie d'une configuration selon l'une des revendications 1 à 57, et / ou entre ladite base et le ou les détecteurs.

68. Un système analytique selon l'une des revendications 59 à 67, **caractérisé en ce que** la lumière d'excitation est lancée sous forme d'impulsions de durée 1 fsec à 10 min.

69. Un système analytique selon l'une des revendications 59 à 68, **caractérisé en ce que** la lumière d'émission provenant des zones de mesure (d) est mesurée de facon résolue dans le temps.

70. Un système analytique selon l'une des revendications 59 à 69, **caractérisé en ce que**, pour référencer la lumière d'excitation disponible, des signaux lumineux du groupe comprenant la lumière d'excitation à l'emplacement des sources de lumière ou après son expansion ou après son multiplexage en rayons individuels, la lumière diffusée à la longueur d'onde d'excitation depuis l'emplacement d'une ou de plusieurs zones de mesure discrètes, et la lumière de la longueur d'onde d'excitation découplée par les structures de réseau de diffraction (c) ou (c'), sont mesurés.

71. Un système analytique selon la revendication 70, **caractérisé en ce que** les zones de mesure (d) pour la détermination de la lumière d'émission et du signal de référence sont identiques.

72. Un système analytique selon l'une des revendications 59 à 71, **caractérisé en ce que** le lancement de la lumière d'excitation et la détection de la lumière d'émission d'une ou de plusieurs des zones de mesure (d) est effectué séquentiellement pour une ou plusieurs cellules.

73. Un système analytique selon la revendication 72, **caractérisé en ce que** l'excitation et détection séquentielle est effectuée grâce à des composants optiques mobiles du groupe comprenant des miroirs, des prismes déviateurs, et des miroirs dichroïques.

74. Un système analytique selon la revendication 73, **caractérisé en ce que** l'excitation et détection séquentielle est effectuée grâce à un scaneur préservant essentiellement l'angle et la mise au point.

75. Un système analytique selon l'une des revendications 72 à 74, **caractérisé en ce que** le dispositif, selon l'une des revendications 1 à 57, est déplacée entre des étapes d'excitation et de détection séquentielles.

76. Une méthode pour fabriquer un ensemble de compartiments en un réseau à une ou deux dimensions, selon l'une des revendications 1 à 57, comprenant une base (4) et un corps (6) associé à ladite base de telle facon qu'un réseau de cavités spatiales (3) formant un réseau de cellules, chacune avec au moins un port d'entrée (1) et un port de sortie (2), est formé entre ladite base (4) et ledit corps (6), **caractérisé en ce que** au moins un port de sortie (2) de chaque cellule est connectée à un réservoir (5) connecté fluidiquement avec ladite cellule, le réservoir étant susceptible de recevoir du liquide sortant de la cellule et étant formé dans la paroi externe du corps (6) associé à la base (4) et situé au-dessus ou en-dessous desdites cavités (3), **caractérisé en ce que** la base (4) et le corps (6) sont associés de telle facon que différentes dites cavités (3) sont scellées hermétiquement l'une à l'autre.

77. Une méthode selon la revendication 76, **caractérisé en ce que** la base (4) et le corps (6) associé avec cette base sont liés de facon irréversible.

78. Une méthode selon la revendication 77, **caractérisé en ce que** la base (4) et le corps (6) associé avec cette base sont collés l'un à l'autre.

79. Une méthode selon la revendication 76, **caractérisé en ce que** la base (4) et le corps (6) associé avec cette base sont liés de facon réversible.

80. Une méthode de détermination d'un ou de plusieurs analytes dans un ou plusieurs échantillons liquides avec un système analytique selon l'une des revendications 58 à 75, **caractérisé en ce que** l'échantillon et des solutions de réactifs supplémentaires optionelles sont supplées dans les compartiments, et **caractérisé en ce que** ces liquides peuvent sortir dans un réservoir (5) connecté fluidiquement avec une cellule, en tant que partie desdits compartiments.

81. Une méthode selon la revendication 80, **caractérisée en ce que** des éléments de reconnaissance biologiques ou biochimiques ou synthétiques pour la détermination d'un ou de plusieurs analytes sont immobilisés sur la base (4) dudit dispositif, la lumière d'excitation est dirigée vers les zones de mesure sur ladite base (4), et la lumière provenant desdites zones de mesure est détectée par au moins un détecteur.

82. Une méthode selon la revendication 81, **caractérisée en ce que** la base (4) comprend un guide d'ondes optique, qui est continu ou fractionné en zones discrètes, la lumière d'excitation est lancée dans lesdits guides d'ondes au moyen d'un composant de couplage optique, et la lumière de mesure provenant des zones de mesure (d), qui sont en interaction optique avec ledit guide d'ondes optique, est détectée par un ou plusieurs détecteurs.

83. Une méthode selon la revendication 82, **caractérisée en ce que** ledit guide d'ondes optique est suppléé en tant que guide d'ondes optique sous forme de film, avec une première couche optiquement transparente (a) sur une seconde couche optiquement transparente (b) avec un indice de réfraction inférieur à celui de la couche (a), **caractérisée de plus en ce que** la lumière d'excitation est couplée en entrée dans la couche optiquement transparente (a) par une ou plusieurs structures de réseau de diffraction formées dans la couche optiquement transparente (a), et dirigée, en tant qu'onde guidée, vers les zones de mesure (d) situées dessus, et **caractérisée de plus en ce que** la luminescence de molécules susceptible de produire de la luminescence, qui est générée dans le champ évanescent dudit guide d'ondes, est détectée par un ou plusieurs détecteurs, et **caractérisée de plus en ce que** la concentration d'un ou de plusieurs analytes est déterminée à partir de l'intensité de ces signaux lumineux.

84. Une méthode selon la revendication 83 avec un dispositif selon l'une des revendications 37 à 57, **caractérisée en ce que** (premièrement) la luminescence émise isotropiquement ou (deuxièmement) la luminescence qui est couplée en entrée dans la couche optiquement transparente (a) et découplée en sortie par une structure de réseau de diffraction (c), ou la luminescence comprenant les deux composantes (premièrement et deuxièmement), est mesurée simultanément.

85. Une méthode selon l'une des revendications 83 à 84, **caractérisée en ce que**, pour la génération de ladite luminescence, une molécule luminescente ou une nano-particule luminescente est utilisée comme marqueur luminescent qui peut être excité et émet à une longueur d'onde entre 300 nm et 1100 nm.

86. Une méthode selon la revendication 85, **caractérisée en ce que** le marqueur luminescent est lié à l'analyte ou, dans un assay compétitif, à un analyte analogue ou, dans un assay à étapes multiples, à un des partenaires de liaison des éléments de recognition biologiques ou biochimiques ou synthétiques immobilisés ou aux éléments de recognition biologiques ou biochimiques ou synthétiques.

87. Une méthode selon l'une des revendications 85 à 86, **caractérisée en ce que** un second ou plusieurs autres marqueurs luminescents de longueurs d'onde d'excitation similaires ou différentes de celle du premier marqueur luminescent, et de longueurs d'onde d'émission similaires ou différentes, sont utilisés.

88. Une méthode selon la revendication 87, **caractérisée en ce que** le second ou les plusieurs autres marqueurs luminescents peuvent être excités à la même longueur d'onde que le premier marqueur fluorescent, mais émettent à d'autres longueurs d'onde.

89. Une méthode selon la revendication 87, **caractérisée en ce que** les spectres d'excitation et d'émission des molécules luminescentes utilisées ne se recouvrent pas ou se recouvrent seulement partiellement.

90. Une méthode selon la revendication 87, **caractérisée en ce que** un transfert de charge ou d'énergie optique d'un premier marqueur fluorescent, agissant comme donneur, à un second marqueur fluorescent, agissant comme accepteur, est employé pour la détection de l'analyte.

91. Une méthode selon l'une des revendications 83 à 90, **caractérisée en ce que**, en plus de la détermination d'une ou de plusieurs luminescences, des changements de l'indice de réfraction effectif sur les zones de mesures (d) sont déterminés.

92. Une méthode selon l'une des revendications 83 à 91, **caractérisée en ce que** la ou les déterminations de luminescences et / ou déterminations de signaux lumineux à la longueur d'onde d'excitation sont effectués de facon sélective vis-à-vis de la polarisation.

93. Une méthode selon l'une des revendications 83 à 92, **caractérisée en ce que** la ou les luminescences sont mesurées à une polarisation qui est différente de celle de la lumière d'excitation.

94. Une méthode selon l'une des revendications 83 à 93 pour la détermination simultanée ou séquentielle, quantitative ou qualitative d'un ou de plusieurs analytes dans le groupe comprenant les anticorps et antigènes, les récepteurs ou ligands, les composés chélateurs ou histidine-tag, les oligonucléotides, les brins d'ADN ou d'ARN, les analogues d'ADN ou d'ARN, les enzymes, les cofacteurs d' enzyme ou inhibiteurs, les lectines and les carbohydrates.

95. Une méthode selon l'une des revendications 83 à 94, **caractérisée en ce que** les échantillons à analyser sont des fluides corporels naturels, tel que le sang, le sérum, le plasma, la lymphe ou l'urine, ou des fluides de tissus, ou du jaune d'oeuf.

96. Une méthode selon l'une des revendications 83 à 94, **caractérisée en ce que** les échantillons à analyser sont des fluides optiquement troubles, des eaux de surface, un extrait de sol ou de plante, une soupe biologique ou de process.

97. Une méthode selon l'une des revendications 83 à 96, **caractérisée en ce que** les échantillons à analyser sont prélevés à partir de tissus biologiques.

98. L'utilisation d'un dispositif selon l'une des revendications 1 à 57 dans des analyses quantitatives ou qualitatives pour la détermination d'analytes chimiques, biochimiques ou biologiques dans des méthodes de screening dans la recherche pharmaceutique, la chimie combinatoire, le dévelopement clinique et préclinique, pour des études d'assemblage en temps réel et la détermination de paramètres cinétiques en screening d'affinité et en recherche, pour les déterminations quantitatives ou qualitatives d'analytes, particulièrement pour l'analyse d'ADN et d'ARN et pour la détermination de différences génomiques et protéomiques dans le génome, tel que les single nucleotide polymorphisms, pour la determination d' interactions entre des protéines et d'AND, pour la détermination de mécanismes de contrôle dans l'expression d'ARNm et pour la (bio)synthèse des protéines, pour la génération d'études toxicologiques et la détermination de profiles d'expression, particulièrement pour la détermination de marqueurs biologiques et chimiques, tel que l'ARNm, les protéines, les peptides ou petits composés organiques (messagers), et pour la détermination d'anticorps, antigènes, pathogènes ou bactéries en recherche et développement de produits pharmaceutiques, en diagnostique humain et vétérinaire, en recherche et développement de produits agrochimiques, pour le diagnostique symptomatique et pré-symptomatique de plantes, pour la stratification de patients en développement de produits pharmaceutiques et pour la sélection de composés thérapeutiques, pour la détermination de pathogènes, agents et germes nocifs, en particulier les salmonelles, prions, virus et bactéries, en particulier en analytique nutritionelle et environnementale.
